# EUROPEAN PATENT APPLICATION

(11) **EP 3 211 616 A2**
(43) Date of publication of application: **30.08.2017**
(21) Application number: 16196538.9
(22) Date of filing: 31.10.2016
(51) Int. Cl.: G08G 1/0968, G01C 21/36

(54) **DRIVER ASSISTANCE APPARATUS**

(30) Priority: 23.02.2016 KR 20160021244
(71) Applicant: LG Electronics Inc., Seoul 07336 (KR)
(72) Inventor: LI, Chungen, 06772 Seoul (KR)
(74) Representative: Katérle, Axel

(57) **Abstract**

A vehicle driving assistance apparatus comprising in accordance with certain embodiments: an output unit including an audio output unit configured to output an audio notification and a display unit configured to display a visual image; a monitoring unit configured to monitor an inside status of a vehicle and obtain vehicle internal information from the inside status; a camera configured to capture an outside view of the vehicle and obtain vehicle external information from the outside view; and a processor configured to (i) determine, based on the vehicle internal information and the vehicle external information, a first guide mode from a plurality of guide modes including a general guide mode, a display guide mode, and a sound guide mode, and (ii) provide, to the output unit, driving assistance information associated with the first guide mode, wherein the driving assistance information is provided with one or more visual images that are displayed by the display unit and one or more audio notifications that are output by the audio output unit.

## Description

### TECHNICAL FIELD

The present invention relates to a driver assistance apparatus.

### BACKGROUND

A vehicle is an apparatus that transports a user ridding therein in a desired direction. A representative example of a vehicle may be an automobile.

A vehicle includes an internal combustion engine vehicle, an external combustion engine vehicle, a gas turbine vehicle, an electric vehicle, etc. according to type of motor used.

The electric vehicle refers to a vehicle for driving an electric motor using electric energy and includes a pure electric vehicle, a hybrid electric vehicle (HEV), a plug-in hybrid electric vehicle (PHEV), a fuel cell electric vehicle (FCEV), etc.

Recently, intelligent vehicles have been actively developed for safety or convenience of a driver or pedestrian.

The intelligent vehicle is an advanced vehicle using information technology (IT) and is also referred to as a smart vehicle. The intelligent vehicle provides optimal traffic efficiency by introduction of an advanced vehicle system and via association with an intelligent traffic system (ITS).

In addition, research into a sensor mounted in such an intelligent vehicle has been actively conducted. More specifically, a camera, an infrared sensor, a radar, a global positioning system (GPS), a Lidar, a gyroscope, etc. are used for the intelligent vehicle. Among others, the camera is an important sensor playing the role of human eyes.

Accordingly, with development of various sensors and electronic apparatuses, a vehicle including a driver assistance function (sometimes, referred to as "advanced driver assistance system (ADAS)") for assisting driving of a user and improving driving safety and convenience is attracting considerable attention. In particular, there have developed driver assistance apparatuses which monitor internal and external situations of the vehicle by using the developed sensors, and provide monitored information to a user through a graphic image and sound to assist the user's driving.

However, there is a problem that sound guide by the driver assistance apparatus may be hardly recognized by the user depending on various situations inside and outside of the vehicle (also, referred to as vehicle internal and external situations). Also, there is a problem that image guide by the driver assistance apparatus reduces the driver's forward viewing concentration, leading to risk in safety.

### SUMMARY

Embodiments provides a vehicle driver assistance apparatus which provides driver assistance information by an optimal method depending on vehicle internal and external situations, and a vehicle having the same.

According to certain embodiments, a vehicle driving assistance apparatus comprises: an output unit including an audio output unit configured to output an audio notification and a display unit configured to display a visual image; a monitoring unit configured to monitor an inside status of a vehicle and obtain vehicle internal information from the inside status; a camera configured to capture an outside view of the vehicle and obtain vehicle external information from the outside view; and a processor configured to (i) determine, based on the vehicle internal information and the vehicle external information, a first guide mode from a plurality of guide modes including a general guide mode, a display guide mode, and a sound guide mode, and (ii) provide, to the output unit, driving assistance information associated with the first guide mode, wherein the driving assistance information is provided with one or more visual images that are displayed by the display unit and one or more audio notifications that are output by the audio output unit.

The processor may be configured to: determine whether the first guide mode is the display guide mode or the sound guide mode, and change, based on the determination that the first guide mode is the display guide mode or the sound guide mode, a number of the one or more visual images and a number of the one or more audio notifications.

The processor may be configured to: determine whether the first guide mode is the display guide mode, and change, based on the determination that the first mode is the display guide mode, at least one of a shape, a size, a hue, a type, a luminance, and a saturation of each visual image.

The vehicle driving assistance apparatus may further comprise a memory storing data that associates the vehicle internal information and the vehicle external information with the plurality of guide modes, wherein the processor is configured to determine the first guide mode from the plurality of guide modes based on the data. The processor may be configured to: determine, based on at least the vehicle internal information, vehicle internal noise, user behavior information, and passenger behavior information, and determine the first guide mode as the display guide mode based on the vehicle internal noise, the user behavior information, and the passenger behavior information. Alternatively or additionally, the processor may be configured to: determine, based on the vehicle internal information and the vehicle external information, external object information, external weather information, and driver status information, and determine the first guide mode as the sound guide mode based on the external object information, the external weather information, and the driver status information.

The vehicle driving assistance apparatus may further comprise an input unit configured to receive user input, wherein the processor is configured to determine the first guide mode from the plurality of guide modes based on the user input.

The driving assistance information may include navigation information, traffic information, communication information, vehicle state information, advanced driving assistance system (ADAS) information, or driver convenience information, and the processor may be configured to determine a number of the one or more visual images and a number of the one or more audio notifications based on the determination of the first guide mode.

The processor may be configured to: determine whether the first guide mode is the display guide mode, and transfer a speech or an image between a driver and a passenger based on the determination that the first guide mode is the display guide mode. The speech may be made by the passenger located in a back seat of the vehicle and the image may be obtained by capturing a view toward a spare seat or the back seat.

The processor may be configured to: determine whether the first guide mode is the display guide mode, and change directions of the one or more audio notifications toward a driver.

The monitoring unit may include a microphone that measures a vehicle internal noise, and the processor may be configured to determine the first guide mode as the display guide mode based on the vehicle internal noise.

The processor may be configured to change a number of the one or more visual images and a number of the one or more audio notifications based on the determination of the first guide mode.

The processor may be configured to: determine whether the driving assistance information is user convenience information including navigation information, traffic information, communication information, and vehicle state information, and mute the one or more audio notifications provided for the user convenience information including navigation information, traffic information, communication information, and vehicle state information based on the determination that the driving assistance information is the user convenience information.

The vehicle driving assistance apparatus may further comprise one or more sensors configured to monitor outside regions of the vehicle, wherein the processor is configured to: obtain emergency assistance information including automatic emergency braking information, blind-spot detection information, forward collision avoidance information, cross traffic alert information, and parking assistance information, and increase, based on the emergency assistance information, a volume of the one or more audio notifications.

The processor may be configured to provide the one or more visual images as text.

The processor may be configured to: determine whether the first guide mode is switched to the display guide mode, and change at least one of a shape, a size, a hue, a type, a luminance, and a saturation of each visual image based on the determination that the first guide mode is switched to the display guide mode.

The vehicle driving assistance apparatus may further comprise one or more sensors to monitor outside regions of the vehicle, wherein the processor is configured to: obtain emergency assistance information including at least one of automatic emergency braking information, blind-spot detection information, forward collision avoidance information, cross traffic alert information, and parking assistance information, and expand the outside regions of the vehicle for monitoring.

The processor may be configured to: obtain external object information from the vehicle external information, and determine, based on the external object information, whether the first guide mode is the sound guide mode.

The processor may be configured to: determine whether the first guide mode is the sound guide mode, and change, based on the determination that the first mode is the sound guide mode, a volume or direction of each audio notification.

### BRIEF DESCRIPTION OF THE DRAWINGS

FIG. 1 is a diagram showing the appearance of a vehicle having a driver assistance apparatus according to an embodiment of the present invention.
FIG. 2 is a block diagram of a driver assistance apparatus according to an embodiment of the present invention.
FIG. 3 is a plan view of a vehicle having a driver assistance apparatus according to an embodiment of the present invention.
FIG. 4 is a diagram showing an example of a camera according to an embodiment of the present invention.
FIGS. 5 and 6 are diagrams illustrating an example of a method of generating image information from an image of a camera according to an embodiment of the present invention.
FIG. 7 is a diagram showing the inside of a vehicle having a driver assistance apparatus according to an embodiment of the present invention.
FIG. 8 is a flowchart of a process of providing a display guide mode function in a vehicle driver assistance apparatus according to an embodiment of the present invention.
FIG. 9 is a diagram for describing a case where a display guide mode is executed according to an embodiment of the present invention.
FIG. 10 is a flowchart for describing an output method of a display guide mode according to an embodiment of the present invention.
FIG. 11 is a diagram for describing an output method of a general guide mode according to an embodiment of the present invention.
FIGS. 12A and 12B are diagrams for describing a change in an output method throughout a display guide mode, according to an embodiment of the present invention.
FIGS. 13A to 13C are diagrams illustrating a process of being changed into an output method of a display guide mode according to an embodiment of the present invention.
FIG. 14 is a diagram illustrating an example of a display guide mode according to an embodiment of the present invention.
FIG. 15A and 15B are diagrams illustrating another example of a display guide mode according to an embodiment of the present invention.
FIG. 16A and 16B are diagrams illustrating another example of a display guide mode according to an embodiment of the present invention.
FIG. 17A and 17B are diagrams illustrating another example of a display guide mode according to an embodiment of the present invention.
FIG. 18 is a diagram for describing a change in sensitivity of a driver assistance function in a display guide mode according to an embodiment of the present invention.
FIG. 19 is a diagram an example of a driver assistance function in a display guide mode according to an embodiment of the present invention.
FIG. 20 is a flowchart for describing a sound guide mode according to an embodiment of the present invention.
FIG. 21 is a flowchart of an output method of a sound guide mode according to an embodiment of the present invention.
FIGS. 22 and 23 are diagrams for describing an example of a sound guide mode according to an embodiment of the present invention.
FIG. 24 is a block diagram showing the internal configuration of the vehicle having the driver assistance apparatus shown in FIG. 1.

### DETAILED DESCRIPTION OF THE EMBODIMENTS

Hereinafter, the embodiments disclosed in the present specification will be described in detail with reference to the accompanying drawings, and the same or similar elements are denoted by the same reference numerals even though they are depicted in different drawings and redundant descriptions thereof will be omitted. In the following description, with respect to constituent elements used in the following description, suffixes "module" and "unit" are used only in consideration of ease in preparation of the specification, and do not have distinct meanings. Accordingly, the suffixes "module" and "unit" may be used interchangeably. In addition, in the following description of the embodiments disclosed in the present specification, a detailed description of known functions and configurations incorporated herein will be omitted when it may make the subject matter of the embodiments disclosed in the present specification rather unclear. In addition, the accompanying drawings are provided only for a better understanding of the embodiments disclosed in the present specification and are not intended to limit technical ideas disclosed in the present specification. Therefore, it should be understood that the accompanying drawings include all modifications, equivalents and substitutions within the scope and sprit of the present invention.

It will be understood that although the terms first, second, etc., may be used herein to describe various components, these components should not be limited by these terms. These terms are only used to distinguish one component from another component.

It will be understood that when a component is referred to as being "connected to" or "coupled to" another component, it may be directly connected to or coupled to another component or intervening components may be present. In contrast, when a component is referred to as being "directly connected to" or "directly coupled to" another component, there are no intervening components present.

As used herein, the singular form is intended to include the plural forms as well, unless context clearly indicates otherwise.

In the present application, it will be further understood that the terms "comprises", includes," etc. specify the presence of stated features, integers, steps, operations, elements, components, or combinations thereof, but do not preclude the presence or addition of one or more other features, integers, steps, operations, elements, components, or combinations thereof.

A vehicle as described in this specification may include a car and a motorcycle. Hereinafter, a car will be focused upon.

A vehicle as described in this specification may include all of an internal combustion engine vehicle including an engine as a power source, a hybrid vehicle including both an engine and an electric motor as a power source, and an electric vehicle including an electric motor as a power source.

In the following description, the left of a vehicle means the left of the vehicle in the direction of travel and the right of the vehicle means the right of the vehicle in the direction of travel.

In the following description, a left hand drive (LHD) vehicle will be focused upon unless otherwise stated.

In the following description, the driver assistance apparatus is provided in a vehicle to exchange information necessary for data communication with the vehicle and to perform a driver assistance function. A set of some units of the vehicle may be defined as a driver assistance apparatus.

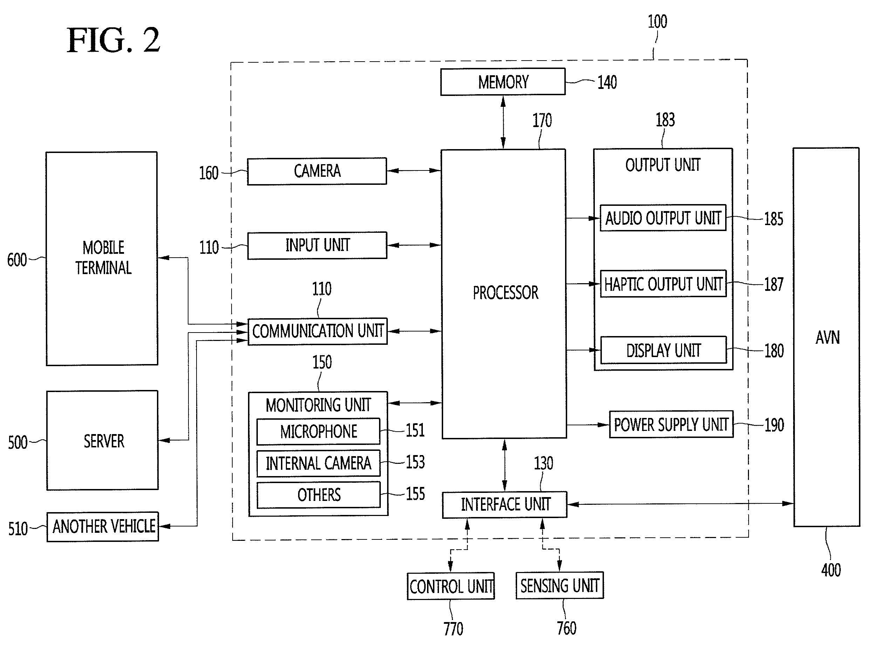

When the driver assistance apparatus is separately provided, at least some units (see FIG. 2) of the driver assistance apparatus are not included in the driver assistance apparatus but may be units of the vehicle or units of another apparatus mounted in the vehicle. Such external units transmit and receive data via an interface of the driver assistance apparatus and thus may be understood as being included in the driver assistance apparatus.

Hereinafter, for convenience of description, assume that the driver assistance apparatus according to the embodiment directly includes the units shown in FIG. 2.

Hereinafter, the driver assistance apparatus according to the embodiment will be described in detail with reference to the drawings.

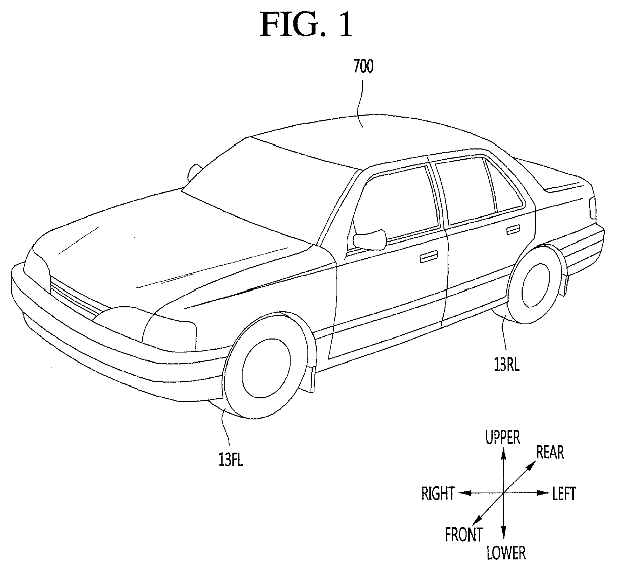

Referring to FIG. 1, the vehicle according to the embodiment may include wheels 13FL and 13RL rotated by a power source and a driver assistance apparatus for providing driver assistance information to a user.

Such a vehicle driver assistance apparatus acquires internal/external situation information by monitoring the inside and the outside of the vehicle, determines one of a general guide mode, a display guide mode, and a sound guide mode according to the internal/external situation information, and provides information according to an output method of the determined mode, thus allowing a user to efficiently recognize driver assistance information.

Specifically, the vehicle driver assistance apparatus provides information through the general guide mode in a general situation. In addition, when an execution condition of the display guide mode or an execution condition of the sound guide mode is detected from the internal/external situation information, the vehicle driver assistance apparatus executes a guide mode corresponding to the detected execution condition, thus providing driver assistance information to a driver according to an optimal output method.

The vehicle driver assistance apparatus may provide an autonomous driving function. That is, the vehicle driver assistance apparatus may provide the autonomous driving function and provide driver assistance information according to an optimal output method depending on the user's situation.

Referring to FIG. 2, such a driver assistance apparatus 100 may include an input unit 110, a communication unit 120, an interface 130, a memory 140, a sensor unit 155, a processor 170, a display unit 180, an audio output unit 185 and a power supply 190. The units of the driver assistance apparatus 100 shown in FIG. 2 are not essential to implementation of the driver assistance apparatus 100 and thus the driver assistance apparatus 100 described in the present specification may have components greater or less in number than the number of the above-described components.

Each component will now be described in detail. The driver assistance apparatus 100 may include the input unit 110 for receiving user input.

For example, a user may input a signal for setting a driver assistance function provided by the driver assistance apparatus 100 or an execution signal for turning the driver assistance apparatus 100 on/off.

According to an embodiment, the user may make an input to directly select one of the general guide mode, the display guide mode, and the sound guide mode through the input unit 110, and also make an input to perform settings on a situation where each of the guide modes is automatically executed.

The input unit 110 may include at least one of a gesture input unit (e.g., an optical sensor, etc.) for sensing a user gesture, a touch input unit (e.g., a touch sensor, a touch key, a push key (mechanical key), etc.) for sensing touch and a microphone for sensing voice input and receive user input.

Next, the driver assistance apparatus 100 may include the communication unit 120 for communicating with another vehicle 520, a terminal 600 and a server 510.

According to an embodiment, the vehicle driver assistance apparatus 100 for the vehicle may receive, through the communication unit 120, communication information including at least one of navigation information, another vehicle information, and traffic information.

The driver assistance apparatus 100 may receive communication information including at least one of navigation information, driving information of another vehicle and traffic information via the communication unit 120. In contrast, the driver assistance apparatus 100 may transmit information on this vehicle via the communication unit 120.

In detail, the communication unit 120 may receive at least one of position information, weather information and road traffic condition information (e.g., transport protocol experts group (TPEG), etc.) from the mobile terminal 600 and/or the server 510.

The communication unit 120 may receive traffic information from the server 510 having an intelligent traffic system (ITS). Here, the traffic information may include traffic signal information, lane information, vehicle surrounding information or position information.

In addition, the communication unit 120 may receive navigation information from the server 510 and/or the mobile terminal 600. Here, the navigation information may include at least one of map information related to vehicle driving, lane information, vehicle position information, set destination information and route information according to the destination.

For example, the communication unit 120 may receive the real-time position of the vehicle as the navigation information. In detail, the communication unit 120 may include a global positioning system (GPS) module and/or a Wi-Fi (Wireless Fidelity) module and acquire the position of the vehicle.

In addition, the communication unit 120 may receive driving information of the other vehicle 510 from the other vehicle 510 and transmit information on this vehicle, thereby sharing driving information between vehicles. Here, the shared driving information may include vehicle traveling direction information, position information, vehicle speed information, acceleration information, moving route information, forward/reverse information, adjacent vehicle information, and turn signal information.

In addition, when a user rides in the vehicle, the mobile terminal 600 of the user and the driver assistance apparatus 100 may pair with each other automatically or by executing a user application.

The communication unit 120 may exchange data with the other vehicle 520, the mobile terminal 600 or the server 510 in a wireless manner.

In detail, the communication module 120 can perform wireless communication using a wireless data communication method. As the wireless data communication method, technical standards or communication methods for mobile communications (for example, Global System for Mobile Communication (GSM), Code Division Multiple Access (CDMA), CDMA2000 (Code Division Multiple Access 2000), EV-DO (Evolution-Data Optimized), Wideband CDMA (WCDMA), High Speed Downlink Packet Access (HSDPA), HSUPA (High Speed Uplink Packet Access), Long Term Evolution (LTE), LTE-A (Long Term Evolution-Advanced), and the like) may be used.

The communication unit module 120 is configured to facilitate wireless Internet technology. Examples of such wireless Internet technology include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A (Long Term Evolution-Advanced), and the like.

In addition, the communication unit 120 is configured to facilitate short-range communication. For example, short-range communication may be supported using at least one of Bluetooth™, Radio Frequency IDentification (RFID), Infrared Data Association (IrDA), Ultra-Wideband (UWB), ZigBee, Near Field Communication (NFC), Wireless-Fidelity (Wi-Fi), Wi-Fi Direct, Wireless USB (Wireless Universal Serial Bus), and the like.

In addition, the driver assistance apparatus 100 may pair with the mobile terminal located inside the vehicle using a short-range communication method and wirelessly exchange data with the other vehicle 520 or the server 510 using a long-distance wireless communication module of the mobile terminal.

Next, the driver assistance apparatus 100 may include the interface 130 for receiving data of the vehicle and transmitting a signal processed or generated by the processor 170.

Specifically, the vehicle driver assistance apparatus 100 may receive at least one of another vehicle information, navigation information, and sensor information through the interface unit 130. The information received as described above may be included in guide information provided by the vehicle driver assistance apparatus 100 or may be included in the vehicle internal/external situation information.

Also, the vehicle driver assistance apparatus 100 may transmit a control signal for executing the vehicle driver assistance function, information generated by the vehicle driver assistance apparatus 100, or the like, through the interface unit 130. For example, the vehicle driver assistance apparatus 100 may change an execution condition for executing an advanced driver assistance system (ADAS) according to the vehicle internal situation information.

Specifically, the vehicle driver assistance apparatus 100 may change an execution condition for at least one of an autonomous emergency braking (AEB) function, a traffic sign recognition (TSR) function, a lane departure warning (LDW) function, a lane keeping assist (LKA) function, a high beam assistance (HBA) function, a forward collision warning (FCW) function, and plus new applications that include TLR (Traffic Light Recognition) or AEB pedestrian (during both day and night).

To this end, the interface unit 130 may perform data communication with at least one of a control unit 770, an audio video navigation (AVN) device 400, and a sensing unit 760 inside of the vehicle in a wired or wireless communication manner.

In detail, the driver assistance apparatus 100 may receive at least one of driving information of another vehicle, navigation information and sensor information via the interface 130.

In addition, the driver assistance apparatus 100 may transmit a control signal for executing a driver assistance function or information generated by the driver assistance apparatus 100 to the controller 770 of the vehicle via the interface 130.

To this end, the interface 130 may perform data communication with at least one of the controller 770 of the vehicle, an audio-video-navigation (AVN) apparatus 400 and the sensing unit 760 using a wired or wireless communication method.

In detail, the interface 130 may receive navigation information by data communication with the controller 770, the AVN apparatus 400 and/or a separate navigation apparatus.

In addition, the interface 130 may receive sensor information from the controller 770 or the sensing unit 760.

Here, the sensor information may include at least one of vehicle traveling direction information, vehicle position information, vehicle speed information, acceleration information, vehicle tilt information, forward/reverse information, fuel information, information on a distance from a preceding/rear vehicle, information on a distance between a vehicle and a lane and turn signal information, etc.

The sensor information may be acquired from a heading sensor, a yaw sensor, a gyro sensor, a position module, a vehicle forward/reverse sensor, a wheel sensor, a vehicle speed sensor, a vehicle tilt sensor, a battery sensor, a fuel sensor, a tire sensor, a steering sensor based on rotation of the steering wheel, a vehicle interior temperature sensor, a vehicle interior humidity sensor, a door sensor, etc. The position module may include a GPS module for receiving GPS information.

The interface 130 may receive user input via the user input unit 110 of the vehicle. The interface 130 may receive user input from the input unit of the vehicle or via the controller 770. That is, when the input unit is provided in the vehicle, user input may be received via the interface 130.

In addition, the interface 130 may receive traffic information acquired from the server. The server 510 may be located at a traffic control surveillance center for controlling traffic. For example, when traffic information is received from the server 510 via the communication unit 120 of the vehicle, the interface 130 may receive traffic information from the controller 770.

Next, the memory 140 may store a variety of data for overall operation of the driver assistance apparatus 100, such as a program for processing or control of the controller 170.

According to an embodiment, the memory 140 may store a condition under which at least one of the general guide mode, the display guide mode, and the sound guide mode is executed. The memory 140 may store an output method by which driver assistance information is provided in each of the guide modes.

For example, the memory 140 may store a case where a noise (dB) inside of the vehicle is equal to or greater than a predetermined dB as an execution condition for the display guide mode and store an output method by which information is output through a graphic image in the display guide mode.

Specifically, in the display guide mode, traffic information (for example, guide for entrance to a children protection zone), navigation information (for example, guide for a lane path), or the like, which has been output through sound in the general guide mode, can be provided through a graphic image.

Also, in the display guide mode, a display method of an existing output graphic image or a newly-output graphic image may be also changed.

For example, in the display guide mode, at least one of the shape, size, hue, type, luminance and saturation of the existing output graphic image may be changed, or the graphic image is displayed in an animation manner, allowing the user to intuitively recognize more complicated information.

For example, when a traffic violation camera is detected, an animated graphic image directly indicating the traffic violation camera and an animated graphic image indicating a speed limit may be displayed in the display guide mode. For example, the animated graphic image indicating the speed is displayed to be changed in the size or hue thereof according to a position relationship between the vehicle and the traffic violation camera, a current speed of the vehicle, or the like, allowing the driver to intuitively recognize that the traffic violation camera is approaching or whether a traffic law is violated.

In addition, the memory 140 may store, as an execution condition for executing the display guide mode, a case where the user is calling, a case where the user is talking with a fellow passenger, a case where a fellow passenger is sleeping, or a case where the user is listening to music.

Also, the memory 140 may store, as an execution condition for executing the sound guide mode, complexity of a vehicle external situation (for example, the number of detected external objects is equal to or greater than a predetermined number), driving while drowsy, or the like. Also, in the sound guide mode, pieces of information, which have been displayed through a graphic image, may be output through sound output or/and haptic output.

In addition, the memory 140 may store data and commands for operation of the driver assistance apparatus 100 and a plurality of application programs or applications executed in the driver assistance apparatus 100. At least some of such application programs may be downloaded from an external server through wireless communication. At least one of such application programs may be installed in the driver assistance apparatus 100 upon release, in order to provide the basic function (e.g., the driver assistance information guide function) of the driver assistance apparatus 100.

Such application programs may be stored in the memory 140 and may be executed to perform operation (or function) of the driver assistance apparatus 100 by the processor 170.

The memory 140 may store data for checking an object included in an image. For example, the memory 140 may store data for checking a predetermined object using a predetermined algorithm when the predetermined object is detected from an image of the vicinity of the vehicle acquired through the camera 160.

For example, the memory 140 may store data for checking the object using the predetermined algorithm when the predetermined algorithm such as a lane, a traffic sign, a two-wheeled vehicle and a pedestrian is included in an image acquired through the camera 160.

The memory 140 may be implemented in a hardware manner using at least one selected from among a flash memory, a hard disk, a solid state drive (SSD), a silicon disk drive (SDD), a micro multimedia card, a card type memory (e.g., an SD or XD memory, etc.), a random access memory (RAM), a static random access memory (SRAM), a read-only memory (ROM), an electrically erasable programmable read-only memory (EEPROM), a programmable read-only memory (PROM), a magnetic memory, a magnetic disk and an optical disc.

In addition, the driver assistance apparatus 100 may operate in association with a network storage for performing a storage function of the memory 140 over the Internet.

Next, the monitoring unit 150 may acquire information about a vehicle internal situation.

Specifically, the monitoring unit 150 may detect at least one of a vehicle internal noise and an operation or biometric information of the user to acquire information about the vehicle internal situation. In addition, the processor 170 may determine whether an execution condition for executing the display guide mode or the sound guide mode is included in the acquired information about the vehicle internal situation.

According to an embodiment, the monitoring unit 150 may include a microphone 151 and detect internal sound of the vehicle. In addition, when the sound detected by the microphone 151 is equal to or greater than a predetermined dB, the processor 170 may automatically execute the display guide mode since the user hardly recognizes sound guide.

A plurality of microphones 151 may be disposed at several positions.

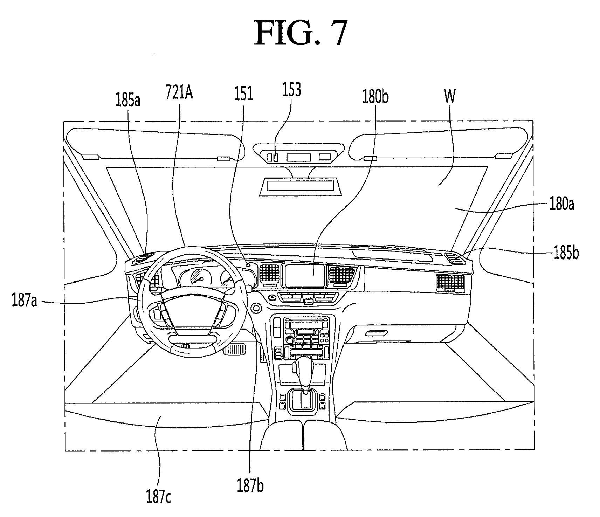

Referring to FIG. 7, the microphone 151 may include a first microphone for detecting sound from the driver's seat and a second microphone for detecting sound from a spare seat. Also, the microphone 151 may include a third microphone for detecting sound around back seats.

The vehicle driver assistance apparatus 100 may provide a conversation assistance function for assisting conversation between a front seat and a back seat, by using the first to third microphones 151. Specifically, the display guide mode provides the conversation assistance function for assisting conversation between the front seat and the back seat by conveying sound detected from the back seat to the front seat, thus enhancing the driver's convenience.

Also, the monitoring unit 150 may include an internal camera 153. The internal camera 153 may acquire a user image. That is, the internal camera 153 may be an image acquisition module that is disposed inside the vehicle.

Referring to FIG. 7, the internal camera 153 may include a first internal camera for capturing the driver, a second internal camera for capturing a fellow passenger seated in the spare seat, and a third internal camera for capturing a fellow passenger seated in the back seat.

The internal camera 153 acquires the user image by capturing the user, and the processor 170 performs image processing on the user image and determines whether the user is sleeping. When it is detected that the fellow passenger is sleeping, the processor 170 automatically executes the display guide mode, preventing disturbance in the fellow passenger's deep sleep.

Also, the vehicle driver assistance apparatus 100 may provide the conversation assistance function for assisting conversation between the front seat and the back seat by using information captured by the internal camera 153.

Specifically, in the display guide mode, an image acquired by capturing the spare seat or the back seat is displayed on a display unit, thus assisting conversation between the front seat and the back seat. Therefore, the driver can grasp an entire internal situation of the vehicle without turning the driver's eyes to the back or the side.

In this case, the display unit 180 displays the captured image on a windshield disposed at the front of the vehicle, thus inducing the driver to keep eyes forward and therefore, preventing decrease in the driver's attention.

Also, it can be understood that the communication unit 120 is included in the monitoring unit 150.

Specifically, the monitoring unit 150 includes the communication unit 120 and receives information about the user's call using a terminal. The processor 170 may execute the display guide mode when it is detected that the terminal is in a call mode.

In addition, other information detected by the monitoring unit 150 may include at least one of pieces of image information including fingerprint information, iris-scan information, retina-scan information, hand geometry information, and voice recognition information. Also, the monitoring unit 150 may further include other sensors 155 for sensing biometric recognition information.

Next, the driver assistance apparatus 100 may further include the sensor unit 155 for sensing objects located in the vicinity of the vehicle. The driver assistance apparatus 100 may include the sensor unit 155 for sensing peripheral objects and may receive the sensor information obtained by the sensing unit 770 of the vehicle via the interface 130. The acquired sensor information may be included in the information on the vehicle surrounding information.

Sensor information acquired as described above may be included in the information about the driver assistance function or may be included in the vehicle internal/external situation information.

The sensor unit 155 may include at least one of a distance sensor 150 for sensing the position of an object located in the vicinity of the vehicle and a camera 160 for capturing the image of the vicinity of the vehicle.

First, the distance sensor 150 may accurately sense the position of the object located in the vicinity of the vehicle, a distance between the object and the vehicle, a movement direction of the object, etc. The distance sensor 150 may continuously measure the position of the sensed object to accurately sense change in positional relationship with the vehicle.

The distance sensor 150 may sense the object located in at least one of the front, rear, left and right areas of the vehicle. The distance sensor 150 may be provided at various positions of the vehicle.

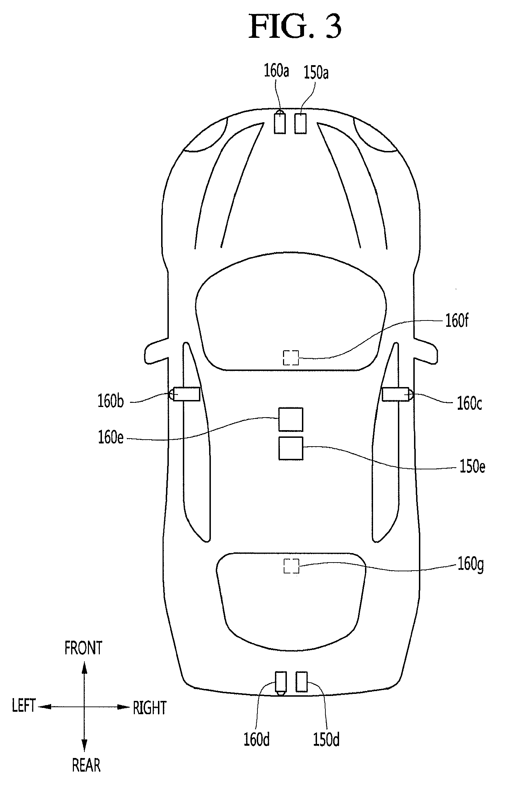

In detail, referring to FIG. 3, the distance sensor 150 may be provided at at least one of the front, rear, left and right sides and ceiling of the vehicle.

The distance sensor 150 may include at least one of various distance measurement sensors such as a Lidar sensor, a laser sensor, an ultrasonic wave sensor and a stereo camera.

For example, the distance sensor 150 is a laser sensor and may accurately measure a positional relationship between the vehicle and the object using a time-of-flight (TOF) and/or a phase-shift method according to a laser signal modulation method.

Information on the object may be acquired by analyzing the image captured by the camera 160 at the processor 170.

In detail, the driver assistance apparatus 100 may capture the image of the vicinity of the vehicle using the camera 160, analyze the image of the vicinity of the vehicle using the processor 170, detect the object located in the vicinity of the vehicle, determine the attributes of the object and generate sensor information.

The image information is at least one of the type of the object, traffic signal information indicated by the object, the distance between the object and the vehicle and the position of the object and may be included in the sensor information.

In detail, the processor 170 may detect the object from the captured image via image processing, track the object, measure the distance from the object, and check the object to analyze the object, thereby generating image information.

The camera 160 may be provided at various positions.

In detail, the camera 160 may include an internal camera 160f for capturing an image of the front side of the vehicle within the vehicle and acquiring a front image.

Referring to FIG. 3, a plurality of cameras 160 may be provided at least one of the front, rear, right and left and ceiling of the vehicle.

In detail, the left camera 160b may be provided inside a case surrounding a left side mirror. Alternatively, the left camera 160b may be provided outside the case surrounding the left side mirror. Alternatively, the left camera 160b may be provided in one of a left front door, a left rear door or an outer area of a left fender.

The right camera 160c may be provided inside a case surrounding a right side mirror. Alternatively, the right camera 160c may be provided outside the case surrounding the right side mirror. Alternatively, the right camera 160c may be provided in one of a right front door, a right rear door or an outer area of a right fender.

In addition, the rear camera 160d may be provided in the vicinity of a rear license plate or a trunk switch. The front camera 160a may be provided in the vicinity of an emblem or a radiator grill.

The processor 170 may synthesize images captured in all directions and provide an around view image viewed from the top of the vehicle. Upon generating the around view image, boundary portions between the image regions occur. Such boundary portions may be subjected to image blending for natural display.

In addition, the ceiling camera 160e may be provided on the ceiling of the vehicle to capture the image of the vehicle in all directions.

The camera 160 may directly include an image sensor and an image processing module. The camera 160 may process a still image or a moving image obtained by the image sensor (e.g., CMOS or CCD). In addition, the image processing module processes the still image or the moving image acquired through the image sensor, extracts necessary image information, and delivers the extracted image information to the processor 170.

In order to enable the processor 170 to more easily perform object analysis, in the embodiment, the camera 160 may be a stereo camera for capturing an image and, at the same time, measuring a distance from an object.

The sensor unit 155 may be a stereo camera including the distance sensor 150 and the camera 160. That is, the stereo camera may acquire an image and, at the same time, sense a positional relationship with the object.

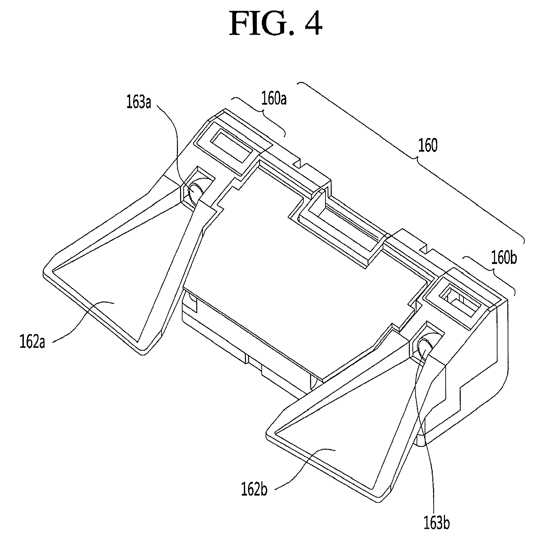

Hereinafter, referring to FIGS. 4 to 6, the stereo camera and a method of detecting image information by the processor 170 using the stereo camera will be described in greater detail.

First, referring to FIG. 4, the stereo camera 160 may include a first camera 160a including a first lens 163a and a second camera 160b including a second lens 163b.

The driver assistance apparatus 100 may further include first and second light shield units 162a and 162b for shielding light incident upon the first and second lenses 163a and 163b.

The driver assistance apparatus 100 may acquire stereo images of the vicinity of the vehicle from the first and second cameras 160a and 160b, detect disparity based on the stereo images, detect an object from at least one stereo image, and continuously track movement of the object after object detection.

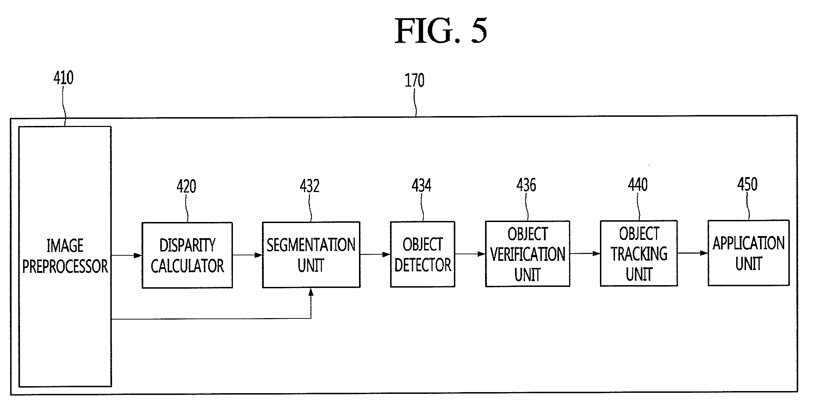

Referring to FIG. 5, as one example of the block diagram of the internal configuration of the processor 170, the processor 170 of the driver assistance apparatus 100 may include an image preprocessor 410, a disparity calculator 420, an object detector 434, an object tracking unit 440 and an application unit 450. Although an image is processed in order of the image preprocessor 410, the disparity calculator 420, the object detector 434, the object tracking unit 440 and the application unit 450 in FIG. 5 and the following description, the present invention is not limited thereto.

The image preprocessor 410 may receive an image from the camera 160 and perform preprocessing.

In detail, the image preprocessor 410 may perform noise reduction, rectification, calibration, color enhancement, color space conversion (CSC), interpolation, camera gain control, etc. of the image. An image having definition higher than that of the stereo image captured by the camera 160 may be acquired.

The disparity calculator 420 may receive the images processed by the image preprocessor 410, perform stereo matching of the received images, and acquire a disparity map according to stereo matching. That is, disparity information of the stereo image of the front side of the vehicle may be acquired.

At this time, stereo matching may be performed in units of pixels of the stereo images or predetermined block units. The disparity map may refer to a map indicating the numerical value of binocular parallax information of the stereo images, that is, the left and right images.

The segmentation unit 432 may perform segmentation and clustering with respect to at least one image based on the disparity information from the disparity calculator 420.

In detail, the segmentation unit 432 may segment at least one stereo image into a background and a foreground based on the disparity information.

For example, an area in which the disparity information is less than or equal to a predetermined value within the disparity map may be calculated as the background and excluded. Therefore, the foreground may be segmented. As another example, an area in which the disparity information is greater than or equal to a predetermined value within the disparity map may be calculated as the foreground and extracted. Therefore, the foreground may be segmented.

The background and the foreground may be segmented based on the disparity information extracted based on the stereo images to reduce signal processing speed, the amount of processed signals, etc. upon object detection.

Next, the object detector 434 may detect the object based on the image segment from the segmentation unit 432.

That is, the object detector 434 may detect the object from at least one image based on the disparity information.

In detail, the object detector 434 may detect the object from at least one image. For example, the object may be detected from the foreground segmented by image segmentation.

Next, the object verification unit 436 may classify and verify the segmented object.

To this end, the object verification unit 436 may use an identification method using a neural network, a support vector machine (SVM) method, an identification method by AdaBoost using Haar-like features or a histograms of oriented gradients (HOG) method.

The object verification unit 436 may compare the objects stored in the memory 140 and the detected object and verify the object.

For example, the object verification unit 436 may verify a peripheral vehicle, a lane, a road surface, a traffic sign, a danger zone, a tunnel, etc. located in the vicinity of the vehicle.

The object tracking unit 440 may track the verified object. For example, the objects in the sequentially acquired stereo images may be verified, motion or motion vectors of the verified objects may be calculated and motion of the objects may be tracked based on the calculated motion or motion vectors. A peripheral vehicle, a lane, a road surface, a traffic sign, a danger zone, a tunnel, etc. located in the vicinity of the vehicle may be tracked.

Next, the application unit 450 may calculate a degree of risk, etc. based on various objects located in the vicinity of the vehicle, for example, another vehicle, a lane, a road surface, a traffic sign, etc. In addition, possibility of collision with a preceding vehicle, whether a vehicle slips, etc. may be calculated.

The application unit 450 may output a message indicating such information to the user as driver assistance information based on the calculated degree of risk, possibility of collision or slip. Alternatively, a control signal for vehicle attitude control or driving control may be generated as vehicle control information.

The image preprocessor 410, the disparity calculator 420, the segmentation unit 432, the object detector 434, the object verification unit 436, the object tracking unit 440 and the application unit 450 may be included in the image processor (see FIG. 31) of the processor 170.

In some embodiments, the processor 170 may include only some of the image preprocessor 410, the disparity calculator 420, the segmentation unit 432, the object detector 434, the object verification unit 436, the object tracking unit 440 and the application unit 450. If the camera 160 includes a mono camera 160 or an around view camera 160, the disparity calculator 420 may be excluded. In some embodiments, the segmentation unit 432 may be excluded.

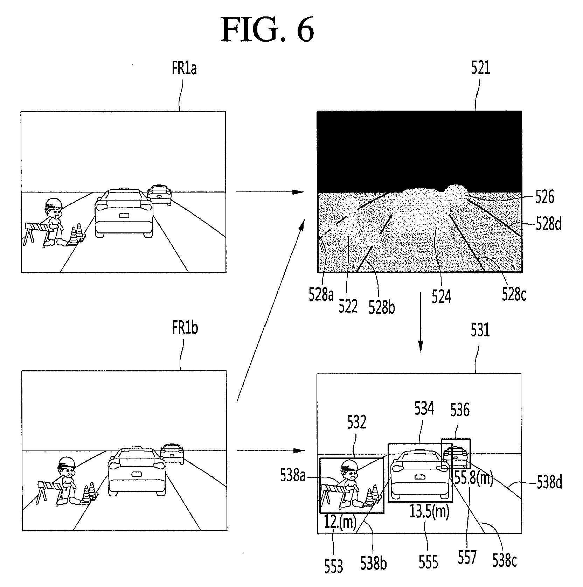

Referring to FIG. 6, during a first frame period, the camera 160 may acquire stereo images.

The disparity calculator 420 of the processor 160 receives stereo images FR1a and FR1b processed by the image preprocessor 410, performs stereo matching with respect to the stereo images FR1a and FR1b and acquires a disparity map 520.

The disparity map 520 indicates the levels of binocular parallax between the stereo images FR1a and FR1b. As a disparity level increases, a distance from a vehicle may decrease and, as the disparity level decreases, the distance from the vehicle may increase.

When such a disparity map is displayed, luminance may increase as the disparity level increases and decrease as the disparity level decreases.

In the figure, disparity levels respectively corresponding to first to fourth lanes 528a, 528b, 528c and 528d and disparity levels respectively corresponding to a construction area 522, a first preceding vehicle 524 and a second preceding vehicle 526 are included in the disparity map 520.

The segmentation unit 432, the object detector 434 and the object verification unit 436 may perform segmentation, object detection and object verification with respect to at least one of the stereo images FR1a and FR1b based on the disparity map 520.

In the figure, object detection and verification are performed with respect to the second stereo image FRIb using the disparity map 520.

That is, object detection and verification are performed with respect to the first to fourth lanes 538a, 538b, 538c and 538d, the construction area 532, the first preceding vehicle 534 and the second preceding vehicle 536 of the image 530.

With image processing, the driver assistance apparatus 100 may acquire various surrounding information of the vehicle, such as peripheral objects or the positions of the peripheral objects, using the sensor unit 155, as sensor information.

The processor 170 may determine the type and position of an object outside of the vehicle through the above-described image processing to acquire traffic information and navigation information. The information may be included in the driver assistance information or vehicle external situation information.

Also, similarly, the processor 170 analyzes the image captured by the internal camera 153, and determines whether the fellow passenger is dozing.

Also, the output unit 183 may include at least two of a display unit 180, an audio output unit 185, and a haptic output unit 187.

The output unit 183 may provide a user with at least one of navigation information, traffic information, communication information, vehicle state information, advanced driver assistance system (ADAS) information, and other driver convenience information, through at least one of visual output, audible output, and haptic output.

The output unit 183 may efficiently convey the driver assistance information to the driver by respective output methods according to the general guide mode, the display guide mode, and the sound guide mode.

The output unit 183 may change an output method in such a way to make the amount of information provided through graphic image output, the amount of information provided through sound output, and the amount of information provided through haptic output different from one another, according to the guide modes.

For example, when it is detected that an internal noise of the vehicle is high, the driver may hardly recognize information through sound. In this case, the output unit 183 may provide an output method of increasing the amount of information provided through graphic images increases and decreasing the amount of information provided through sound.

Also, the output unit 183 changes an output method of the driver assistance information in each output unit according to the guide modes, thus efficiently conveying the information to the driver.

Specifically, when switching to the display guide mode is made, the output unit 183 may change at least one of the shape, size, hue, type, luminance and saturation of an existing output graphic image and output the graphic image. Also, the output unit 183 displays a graphic image in an animation manner, thus allowing the user to intuitively recognize more complicated information.

Each unit of the output unit 183 will be described in detail below.

First, the display unit 180 may display a graphic image representing information to convey the information to the user.

The information displayed through the graphic image by the display unit 180 may include at least one of navigation information, traffic information, communication information, vehicle state information, ADAS information, and other driver convenience information.

The display unit 180 may perform display so as to change the amount of information provided through graphic images depending on whether a current mode is the general guide mode, the display guide mode, or the sound guide mode.

The display unit 180 may display different graphic images depending on whether a current mode is the general guide mode, the display guide mode, or the sound guide mode. Specifically, the display unit 180 changes at least one of the shape, size, hue, type, luminance, and saturation of the graphic image according to the guide modes, and outputs the graphic image.

The display unit 180 may include a plurality of displays.

In detail, the display unit 180 may include a first display 180a for projecting and displaying a graphic image onto and on a vehicle windshield W. That is, the first display 180a is a head up display (HUD) and may include a projection module for projecting the graphic image onto the windshield W. The graphic image projected by the projection module may have predetermined transparency. Accordingly, a user may simultaneously view the front and rear sides of the graphic image.

The graphic image may overlap the image projected onto the windshield W to achieve augmented reality (AR).

The display unit may include a second display 180b separately provided inside the vehicle to display an image of the driver assistance function.

In detail, the second display 180b may be a display of a vehicle navigation apparatus or a cluster located at an internal front side of the vehicle.

The second display 180b may include at least one selected from among a Liquid Crystal Display (LCD), a Thin Film Transistor LCD (TFT LCD), an Organic Light Emitting Diode (OLED), a flexible display, a 3D display, and an e-ink display.

The second display 180b may be combined with a touch input unit to achieve a touchscreen.

Next, the audio output unit 185 may output, through sound, a description on the function of the vehicle driver assistance apparatus 100 or a message checking whether to execute the function or the like. That is, the the vehicle driver assistance apparatus 100 may supplement a description on the function of the the vehicle driver assistance apparatus 100 through the sound output of the audio output unit 185, in addition to a visual display through the the display unit 180.

Specifically, the audio output unit 185 may output, through sound, at least one of navigation information, traffic information, communication information, vehicle state information, ADAS information, and other driver convenience information.

The audio output unit 185 may change a volume according to the guide modes.

Also, the audio output unit 185 may change a volume differently depending on a type of information.

For example, the audio output unit 185 may perform muting for sound guide of the navigation information, the traffic information, the communication information, and the vehicle state information in the display guide mode, and output an alarm for an emergency assistance function of the driver assistance function with a large volume. In this case, the alarm for the emergency assistance function may include an alarm for a driving risk, such as autonomous emergency braking (AEB), forward collision warning (FCW), or AEB pedestrian (during both day and night), and the like.

On the other hand, the audio output unit 185 may be respectively disposed at the driver's seat, the spare seat, and the back seat. The audio output unit 185 may convey sound detected from each seat to perform the conversation assistance function.

Next, the haptic output unit 187 may output the driver assistance information through haptic. For example, when a warning for the driver is included in at least one of the navigation information, the traffic information, the communication information, the vehicle state information, the ADAS information, and the other driver convenience information, the haptic output unit 187 may inform the user of the warning through vibration.

The haptic output unit 187 may provide directional vibration. For example, the haptic output unit 187 is disposed at a steering for steering control to output vibration. Upon provision of the vibration, the haptic output unit 187 outputs vibration in different manners at left and right sides of the steering, thus enabling directionality of the haptic output.

In addition, the power supply 190 may receive power and supply power necessary for operation of the components under control of the processor 170.

Lastly, the driver assistance apparatus 100 may include the processor 170 for controlling overall operation of the units of the driver assistance apparatus 100.

In addition, the processor 170 may control at least some of the components described with reference to FIG. 3 in order to execute the application program. Further, the processor 170 may operate by combining at least two of the components included in the driver assistance apparatus 100, in order to execute the application program.

The processor 170 may be implemented in a hardware manner using at least one selected from among Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors 170, and electric units for the implementation of other functions.

The processor 170 may be controlled by the controller or may control various functions of the vehicle through the controller.

The processor 170 may control overall operation of the driver assistance apparatus 100 in addition to operation related to the application programs stored in the memory 140. The processor 170 may process signals, data, information, etc. via the above-described components or execute the application programs stored in the memory 170 to provide appropriate information or functions to the user.

Hereinafter, a method of providing guide modes in which information is provided by an optimal output method according to a vehicle internal or external situation in the vehicle driver assistance apparatus 100 will be described.

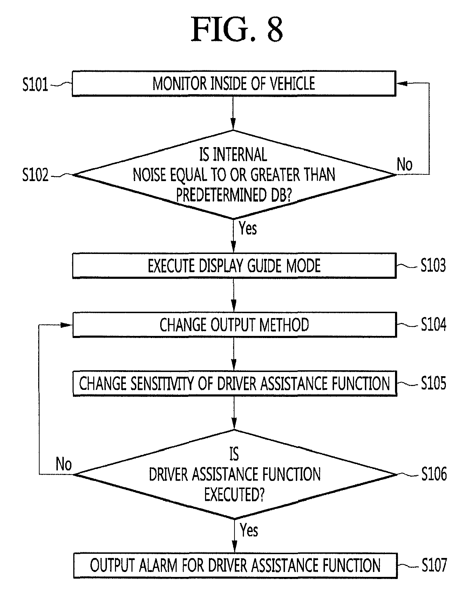

First, a method of providing a display guide mode in the vehicle driver assistance apparatus 100 will be described with reference to FIGS. 8 to 19.

Referring to FIG. 8, first, the vehicle driver assistance apparatus 100 may acquire vehicle internal information by monitoring the inside or the outside of a vehicle (S101).

In this case, it is assumed that the vehicle driver assistance apparatus 100 is providing driver assistance information in a general guide mode.

When an execution condition of a display guide mode stored in the memory 140 is detected from the acquired vehicle internal information, the processor 170 may execute the display guide mode.

For example, the monitoring unit 150 may include a microphone 151 and detect internal sound of the vehicle. In addition, when the sound detected by the microphone 151 is equal to or greater than a predetermined dB, the processor 170 may automatically execute the display guide mode since the user hardly recognizes sound guide (S102).

Also, the monitoring unit 150 may include an internal camera 153 and acquire a user image by capturing a user. The processor 170 may detect whether a fellow passenger is sleeping by performing image analysis on the user image. In addition, when it is detected that the fellow passenger is sleeping, the processor 170 executes the display guide mode, preventing disturbance in the fellow passenger's sleep. On the other hand, it is detected that a person who gets drowsy is the driver, the processor 170 may inform the driver of a warning through haptic or/and sound, preventing drowsy driving of the driver or may execute the sound guide mode.

Also, the communication unit 120 receives information from the user's terminal to determine whether the user is calling, and the processor 170 automatically executes the display guide mode when it is detected that the user is calling.

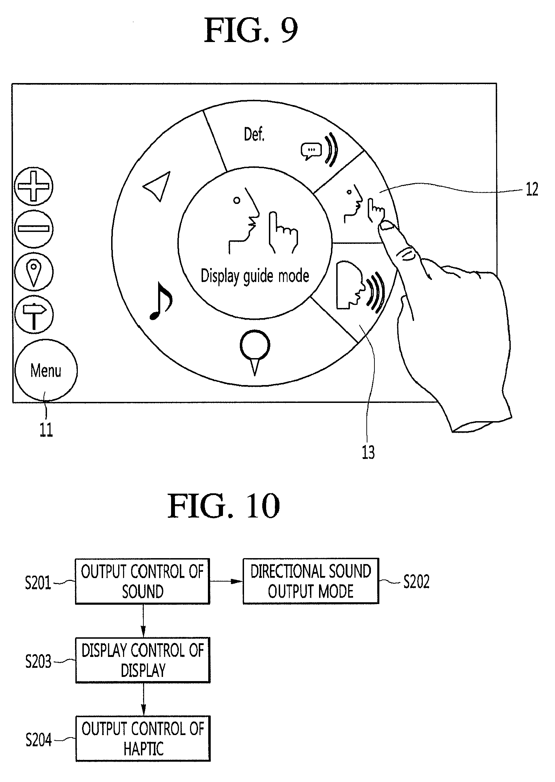

Also, referring to Fig. 9, the second display unit 180b may provide a menu 12 for executing the display guide mode and a menu 13 for executing the sound guide mode. The user may directly execute the display guide mode by selecting the menu for executing the display guide mode.

That is, the processor 170 may execute the display guide mode when the execution condition for the display guide mode is detected or an input for executing the display guide mode is received from the user (S103).

In addition, the vehicle driver assistance apparatus 100 may change an output method and provide driver assistance information when the display guide mode is executed (S104).

Specifically, when switching to the display guide mode is made, the processor 170 changes the amounts of pieces of information respectively provided through graphic image output, sound output, and haptic output.

For example, the processor 170 may provide an output method for the display guide mode, which increases the amount of information provided through graphic images and decreases the amount of information provided through sound.

Also, the processor 170 may change an output method for at least one of existing graphic image output, existing sound output, and existing haptic output when switching to the display guide mode is made.

An output method for the display guide mode will be described below in detail with reference to FIG. 10.

First, when the display guide mode is executed, sound output may be controlled (S201).

Specifically, when the display guide mode is executed, the processor 170 may change the amount of information output through sound and may change a volume according to an attribute of the information.

For example, the processor 170 may perform muting for sound guide of the navigation information, the traffic information, the communication information, the vehicle state information, and output an alarm for an emergency assistance function of the driver assistance function with a large volume.

In addition, when the display guide mode is executed, display output may be controlled (S203).

Specifically, when the display guide mode is executed, the processor 170 may change the amount of information displayed as the graphic image. For example, the processor 170 may provide information, which has been output through sound, through a graphic image.

According to an embodiment, the processor 170 may display at least one of the navigation information, the traffic information, the communication information, and the vehicle state information, which have been provided through sound guide in the general guide mode, through a graphic image.

Also, when switching to the display guide mode is made, the processor 170 changes at least one of the shape, size, hue, type, luminance and saturation of an existing output graphic image and outputs the graphic image. In this case, the processor 170 may display the graphic image in an animation manner, thus allowing the user to intuitively recognize more complicated information.

When the audio output unit 185 is capable of performing directional sound output to focus sound to the driver seat, the vehicle driver assistance apparatus 100 may provide a directional sound output mode when the display guide mode is executed (S202).

Specifically, the processor 170 may provide the directional sound output mode for focusing sound to the driver when the display guide mode is executed since the fellow passenger falls asleep. In this case, the amount of information output through sound and a volume of the sound may not be changed.

Also, when it is detected that the driver is talking with a fellow passenger and the display guide mode is then executed, the processor 170 may provide a conversation assistance function for assisting conversation with the fellow passenger in the directional sound output mode.

Specifically, in the display guide mode, it is possible to provide the conversation assistance function for assisting conversation between the front seat and the back seat by conveying sound detected from the back seat to the front seat, thus enhancing the driver convenience.

In addition, in the display guide mode, an image acquired by capturing the spare seat or the back seat is displayed on the display unit 180, thus assisting conversation between the front seat and the back seat. In this case, the driver can grasp an entire internal situation of the vehicle without turning the driver's eyes to the back or the side.

Also, when the display guide mode is executed because of a calling state, the processor 170 may provide the directional sound output mode for focusing call sound only to the driver.

The display unit 170 may increase the amount of information provided through haptic output (S204).

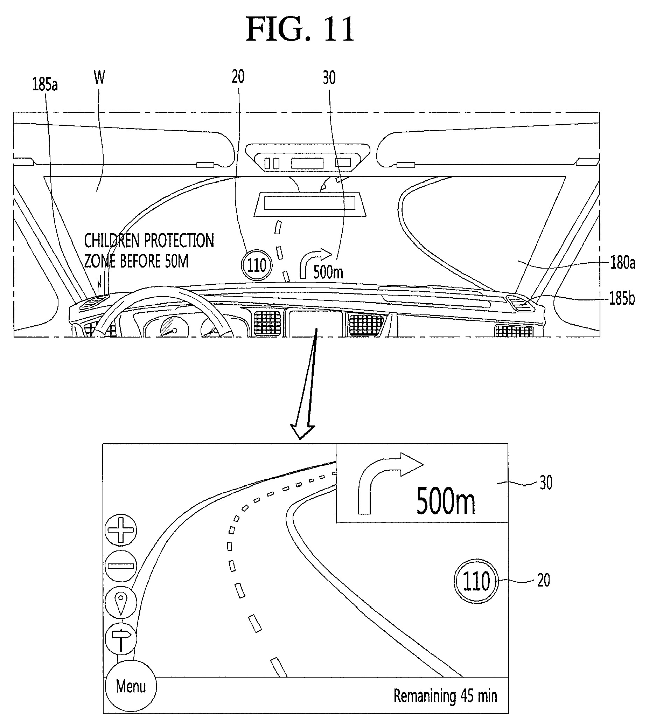

Examples of a method of providing driver assistance information depending on a specific situation in a display guide mode will be described below with reference to FIGS. 11 to 17.

Referring to FIG. 11, as an example, traffic information indicating that a children protection zone is reached may be output through sound in the general guide mode. In this case, traffic information and and navigation information including a speed limit and a subsequent movement route may be output through a second graphic image 20 and a third graphic image 30.

In this situation, when a noise equal to or greater than a predetermined dB is detected, the processor 170 may output the traffic information indicating that a children protection zone is reached, which has been provided through sound, through a graphic image on the first display unit 180a simultaneously with sound output.

In this case, the output of the second display unit 180b may not be changed. That is, when a state where the driver may not instantaneously recognize the sound guide of important traffic information due to a noise is detected, the processor 170 may provide information through the graphic image in addition to sound guide.

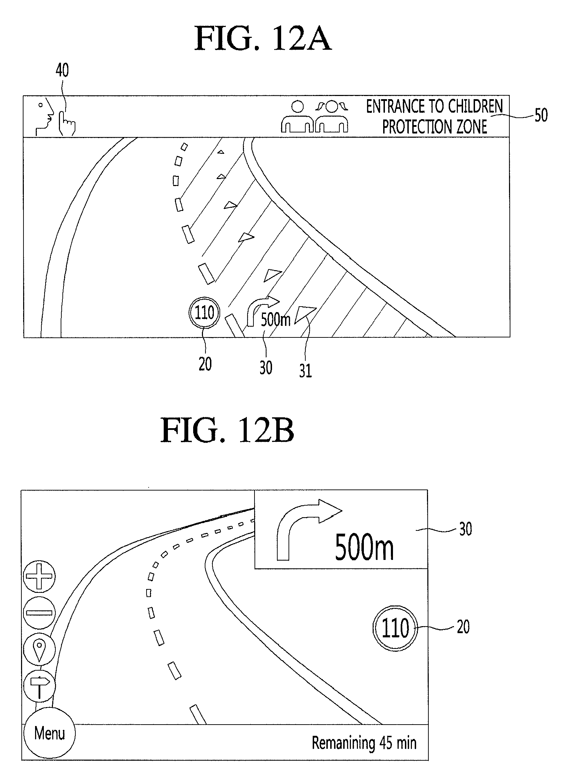

For example, referring to FIG. 12A, the first display unit 180a may display a fifth display image 50 representing traffic information on an upper end of a windshield and display a forth graphic image 40 representing a guide icon indicating that a temporary display guide mode is entered in the upper end.

Also, in addition to a third graphic image 30 representing route guide, which is an existing image, a 31st graphic image 31 showing a route in a carpet shape may be further displayed. A second graphic image 20 and the third graphic image 30 which are existing graphic images may be maintained as being displayed. In this case, the size, luminance, saturation, hue, or the like of the second graphic image 20 or the third graphic image 30 may be changed, enhancing discrimination.

Also, referring to FIG. 12B, the second display unit 180b may maintain display of the second graphic image 20 representing traffic information and the third graphic image representing navigation information, as in an existing general guide mode.

Thereafter, when the noise equal to or greater than the predetermined dB remains the same for a predetermined period of time, the processor 170 may execute the display guide mode.

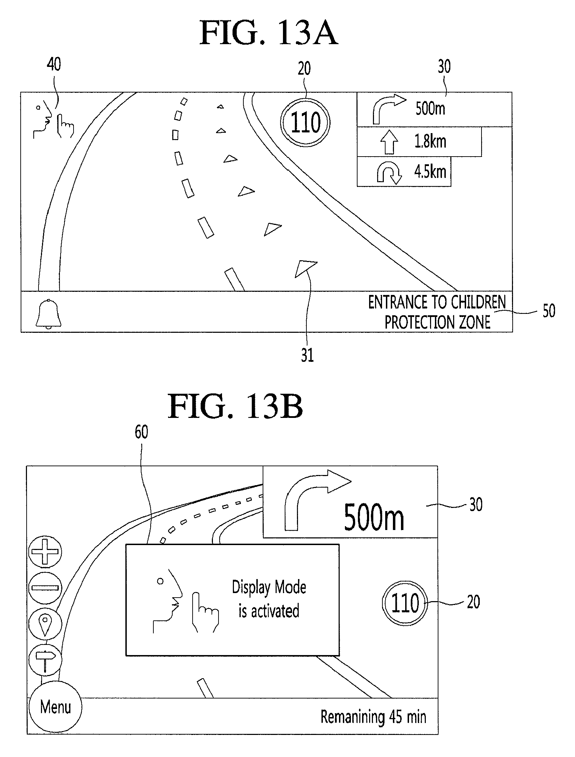

Specifically, referring to FIG. 13A, the first display unit 180a may display the fifth graphic image 50 representing the traffic information which has been provided through sound, on the lower end of the windshield. That is, the information which has been output through sound in the general guide mode may be displayed in a text format on the lower end of the windshield in the display guide mode.

Also, the processor 170 may increase the amount of information of an existing graphic image which has been displayed. Referring to FIG. 13A, the third graphic image 30 which has represented only the subsequent movement route may be changed to a graphic image representing not only the subsequent movement route but also a movement route subsequent to the movement route. In this case, the size, luminance, saturation, hue, or the like of the third graphic image 30 is changed, enhancing discrimination.

As described above, the processor 170 may increase the amount of information displayed through a graphic image by the first display unit 180a in the display guide mode.

Also, when the graphic guide mode is automatically executed, the second display unit 180b may display a pop-up window 60 representing that the display guide mode is executed as illustrated in FIG. 13B.

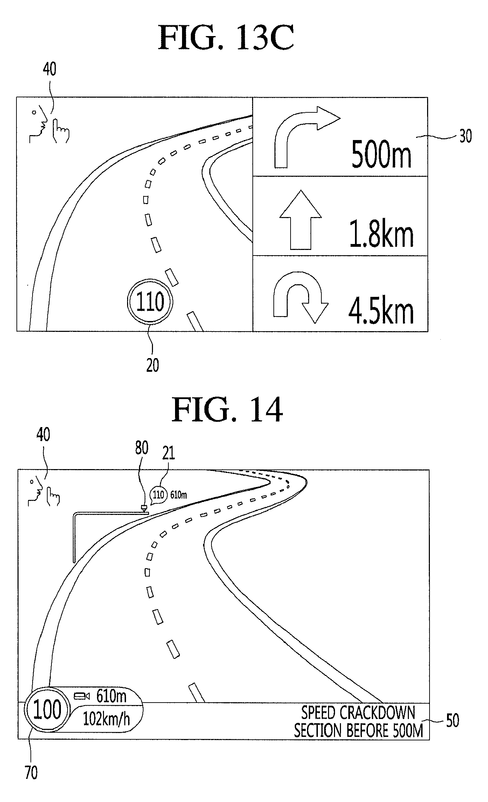

Thereafter, referring to FIG. 13C, the second display unit 180b may remove the pop-up window 60 and then display the forth graphic image 40 representing a guide icon indicating that a temporary display guide mode is entered in the upper end. The second display unit 180b may display the third graphic image 30 sequentially representing a change in the movement route by increasing the amount of information of the third graphic image 30 which has represented only the subsequent route. The existing second graphic image 20 may be maintained as being displayed. In this case, the size, luminance, saturation, hue, or the like of the second and third graphic images 20 and 30 are changed, enhancing discrimination.

As described above, in the display guide mode, pieces of information which has been provided through sound are provided through graphic images, thus enabling efficient information provision even in a situation where the user hardly recognizes sound. Also, it is possible to provide information to the driver more accurately by increasing the amount of information of an existing graphic image which has been displayed and enhancing discrimination.

As another example, a display guide mode in a case where a vehicle enters a traffic regulation section will be described.

Referring to FIG. 14, when the display guide mode is executed, the first display unit 180a may display a fifth graphic image 50 representing a traffic information sound guide indicating that a speed crackdown section is reached, on the lower end of the windshield. In addition, the first display unit 180a may further display a seventh graphic image 70 including information about speed crackdown.

In particular, the first display unit 180a may display a graphic image 21 indicating a traffic violation camera 80 in an animation manner, thus providing the traffic regulation information to the user more accurately.

For example, a 21st graphic image 21 may be formed by a pop-up window on the traffic violation camera 80. The graphic image 21 may be displayed by changing at least one of the size, saturation, or hue thereof, depending on a difference between a current speed of the vehicle and a speed limit and a distance between the camera 80 and the vehicle.

As another example, there will be described a display guide mode when the vehicle enters an intersection which the vehicle can enter through a plurality of paths.

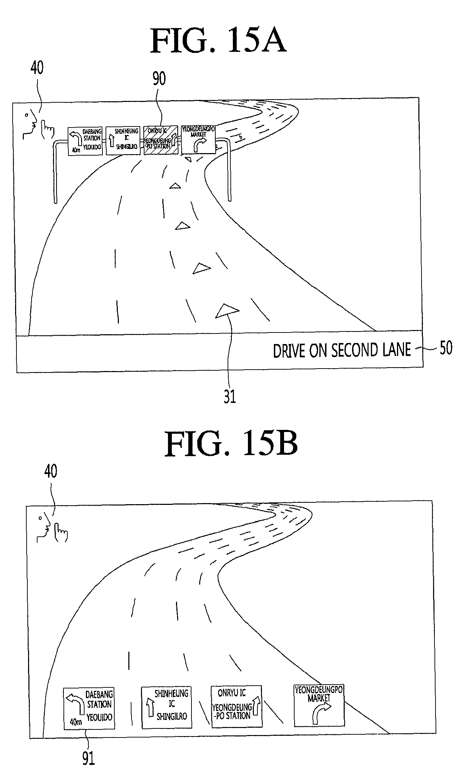

Referring to FIG. 15A, when the display guide mode is executed, the first display unit 180a may display lane path guide information which has been output through sound, through a 31 st graphic image 31 having a carpet shape and a fifth graphic image 50 representing a text.

Also, a ninth graphic image 90 representing lane guide is displayed to be superimposed on a road sign indicating destinations of lanes which are different from each other. That is, in the display guide mode, navigation information, which has been provided through sound, may be displayed through a graphic image.

Referring to FIG. 15B, the second display unit 180b may display a graphic image representing lanes of the intersection and display a 91st graphic image 91 representing destinations of the lanes to be superimposed on the lanes.

As another example, a display guide mode in a case where a text message is transmitted will be described.

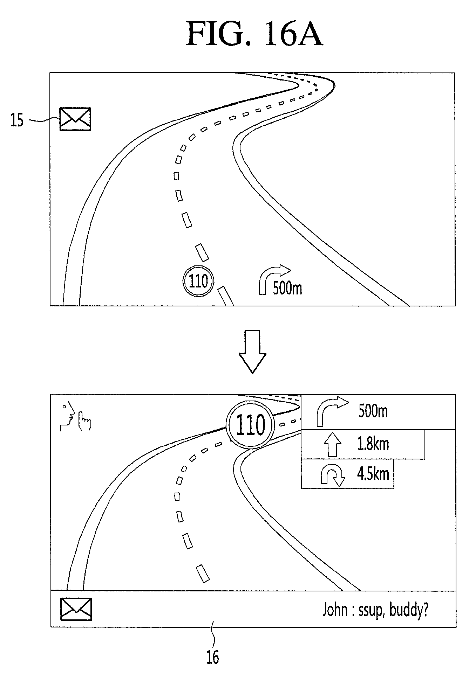

Referring to FIG. 16A, an upper image represents a case where a text message is received in the general guide mode. In this case, the first display unit 180a may display a 15th graphic image 15 representing an icon indicating that the message is received, and content of the message may be output through sound.

A lower image in FIG. 16A represents a case where a text message is received in the display guide mode. In this case, the first display unit 180a may display a 16th graphic image 16 representing the text message which has been provided through sound, on the lower end of the windshield.

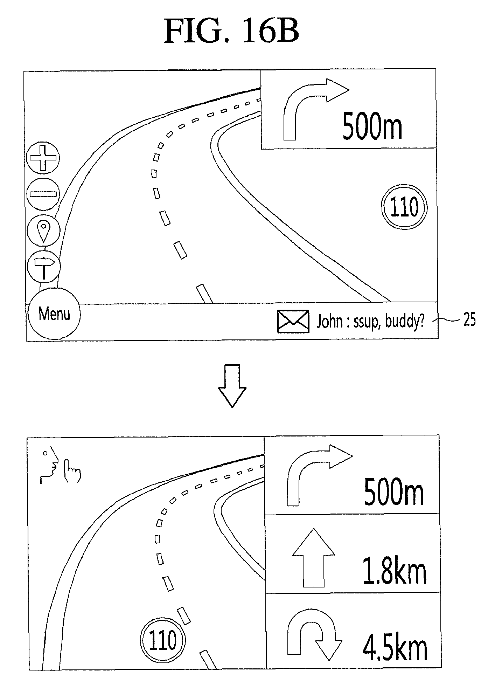

Referring to FIG. 16B, an upper image represents a case where a text message is received in the general guide mode. In this case, the second display unit 180b may display a 25th graphic image 25 representing the text message on the lower end of the windshield.

A lower image in FIG. 16B represents a case where a text message is received in the display guide mode. In this case, the second display unit 180b may remove the 25th graphic image 25 representing the text message and further display graphic images representing other information.

As another example, a display guide mode in the case of lack of fuel will be described.

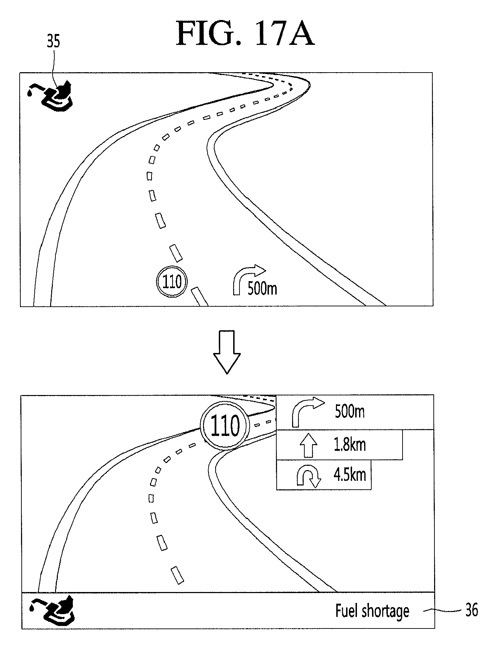

Referring to FIG. 17A, an upper image represents a case where the lack of fuel occurs in the general guide mode. In this case, the first display unit 180a displays a 35th graphic image 35 representing a simple icon indicating the lack of fuel, and detailed vehicle state information may be output through sound.

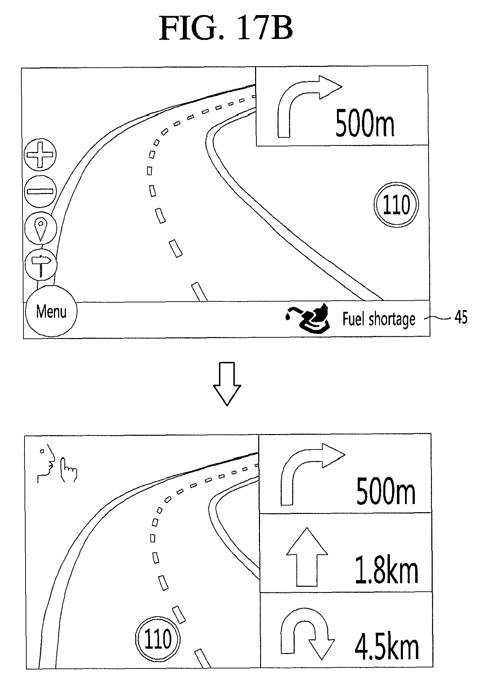

A lower image in FIG. 17B represents a case where the lack of fuel occurs in the display guide mode. In this case, the first display unit 180a may further display a 36th graphic image 36 representing the vehicle state information which has been provided through sound on the lower end of the windshield.

Referring to FIG. 17B, an upper image represents a case where lack of fuel occurs in the general guide mode. In this case, the second display unit 180b displays a 25th graphic image 25 representing the text message on the lower end of the windshield.

A lower image in FIG. 17B represents a case where the lack of fuel occurs in the display guide mode. In this case, the second display unit 180b may remove the 25th graphic image 25 representing the text message and further display graphic images representing other information, thus securing a display space.

As described above, in the display guide mode, pieces of information which has been provided through sound are provided through graphic images, thus enabling efficient information provision even in a situation where the user hardly recognizes sound. Also, it is possible to provide information to the driver more accurately by increasing the amount of information of an existing graphic image which has been displayed and enhancing discrimination.

Referring back to the description for the method of providing the display guide mode in the vehicle driver assistance apparatus 100, the processor 170 may change sensitivity of the driver assistance function after the output method has been switched to the display guide mode (S105).

Specifically, since the situation in which the display guide mode is executed corresponds to a case where the driver's concentration on driving is low, it is possible to achieve safe driving by enhancing the sensitivity of the driver assistance function.

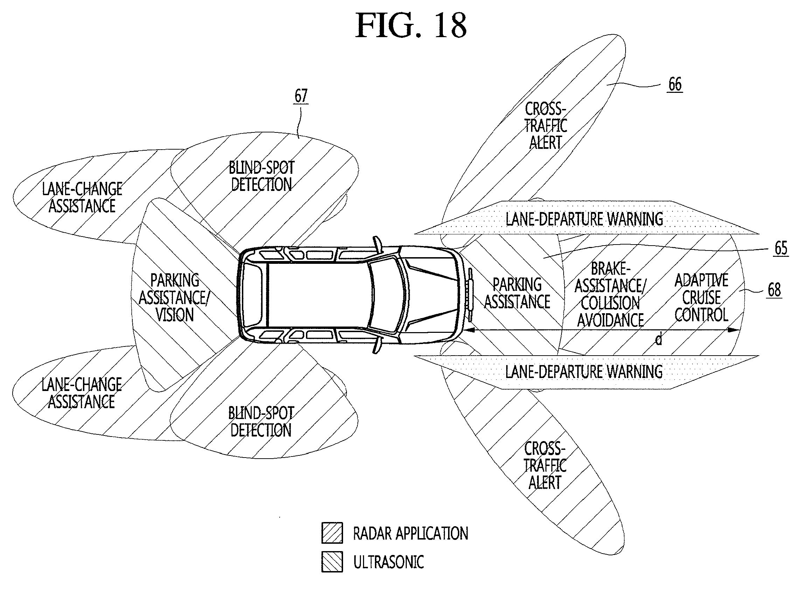

Specifically, referring to FIG. 18, when the display guide mode is executed, the processor 170 may change the sensitivity of an automatic emergency braking (AEB) function. Specifically, the processor 170 may perform control so as to increase a spaced distance d or/and spaced region 68 from an obstacle on which the AEB function is performed, thus enhancing the sensitivity thereof.

Also, the processor 170 may change the sensitivity of a cross traffic alert function. Specifically, the processor 170 may perform control so as to increase a region 66 in which the cross traffic alert function is performed, thus enhancing the sensitivity thereof.

Also, the processor 170 may change the sensitivity of a parking assistance function. Specifically, the processor 170 may perform control so as to increase a region 65 in which the parking assistance function for performing alarm depending on a distance from an obstacle ahead or behind of the vehicle upon parking is performed, thus enhancing the sensitivity thereof.

Also, the processor 170 may change the sensitivity of a blind-spot detection function. Specifically, the processor 170 performs control so as to increase a blind spot 67 of the vehicle, thus enhancing the sensitivity thereof.

In addition, the processor 170 may change sound guide for the driver assistance function when switching to the display guide mode is made. Specifically, the processor 170 may output an alarm for an emergency assistance function with a large volume.

For example, the processor 170 may increase an alarm volume for a warning related with at least one of the AEB function, the blind-spot detection function, the forward collision avoidance function, the cross traffic alert function, and the parking assistance function.

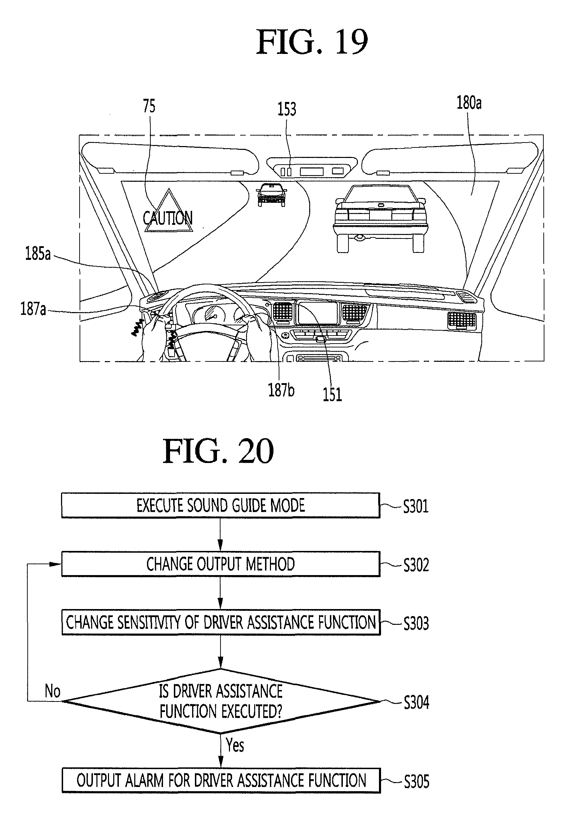

Also, the processor 170 may perform muting on sound guide for other driver assistance functions and display a graphic image. Specifically, referring to FIG. 19, the first display unit 180a may display a 75th graphic image 75 representing information guide for execution of a lane departure warning (LDW) function.

As described above, in the display guide mode, it is possible to enhance safe driving by controlling the driver assistance function in consideration of the driver's concentration.

Next, a method of providing a sound guide mode in the vehicle driver assistance apparatus 100 will be described with reference to FIGS. 20 to 23.

First, the vehicle driver assistance apparatus 100 acquires vehicle internal and external information and when an execution condition for executing a sound guide mode from the vehicle internal and external information, executes the sound guide mode (S301).

Also, the memory 170 may execute the sound guide mode when a complexity of an external situation of the vehicle is high (for example, the number of detected external objects is equal to or greater than a predetermined number). That is, the processor 170 may execute the sound guide mode when the user hardly recognizes a graphic image displayed on the windshield, such as when there are many external objects or it's raining.

Also, the processor 170 may perform the sound guide mode when the driver gets drowsy, thus preventing drowsy driving.

In addition, the processor 170 may execute the sound guide mode when the driver directly makes an input to execute the sound guide mode.

Next, the processor 170 may change an output method according to the sound guide mode.

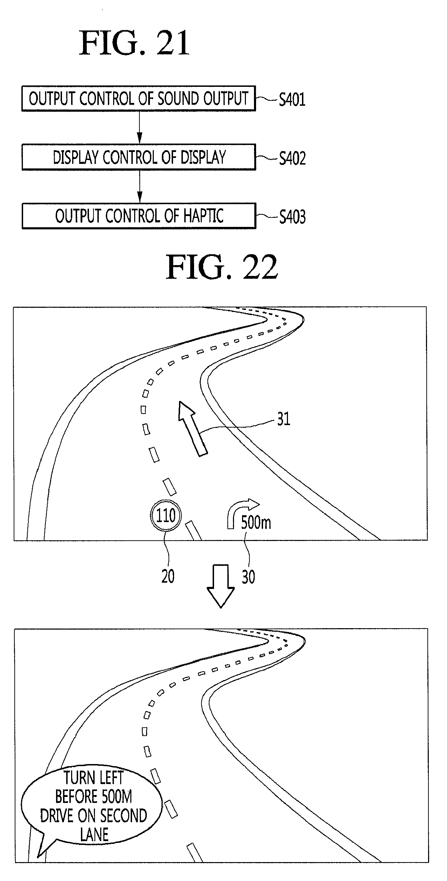

Specifically, referring to FIG. 21, the processor 170 changes the amounts of pieces of information respectively provided through graphic image output, sound output, and haptic output, when switching to the sound guide mode is made.

For example, the processor 170 may decrease the amount of information provided through the graphic image and increase the amount of information provided through sound.

Also, the processor 170 changes at least one of an existing graphic image output method, an existing sound output method, and an existing haptic output method when switching to the display guide mode is made (S401 and S402).

The display unit 170 may increase the amount of information provided through haptic (S403).

Referring to FIG. 22, an upper image represents a state of the windshield in the general guide mode. In this case, the first display unit 180a may display a second graphic image 20 representing traffic information, and a third graphic image 30 and a 31st graphic image 31 representing navigation information.

A lower image represents a state of the windshield in the sound guide mode. In this case, the graphic images all are removed, and pieces of information which has been provided by graphic images may be provided by sound through the audio output unit 185.

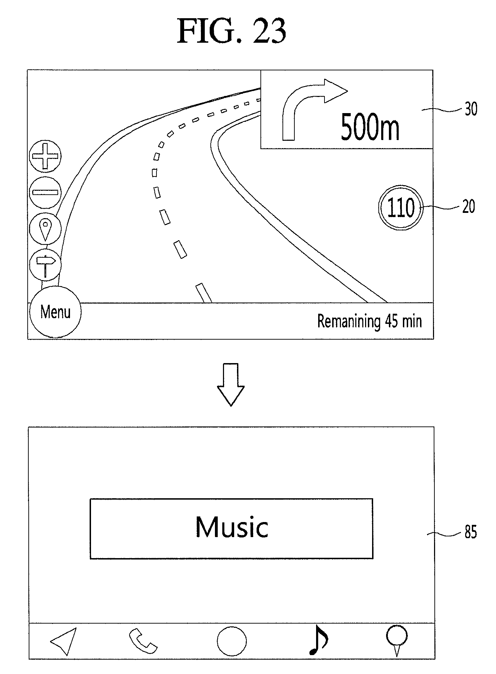

Referring to FIG. 23, an upper image represents a state of the second display unit 180b in the general guide mode. In this case, the second display unit 180b may display a second graphic image 20 representing traffic information, and a third graphic image 30 representing navigation information.

A lower image represents a state of the windshield in the sound guide mode. In this case, the graphic images all are removed, and switching to a screen 85 for a control mode desired by the user may be performed.

As described above, in the sound guide mode, pieces of information which have been provided through graphic images are provided through sound, thus enabling efficient information provision even in a situation where the user hardly recognizes graphic images.

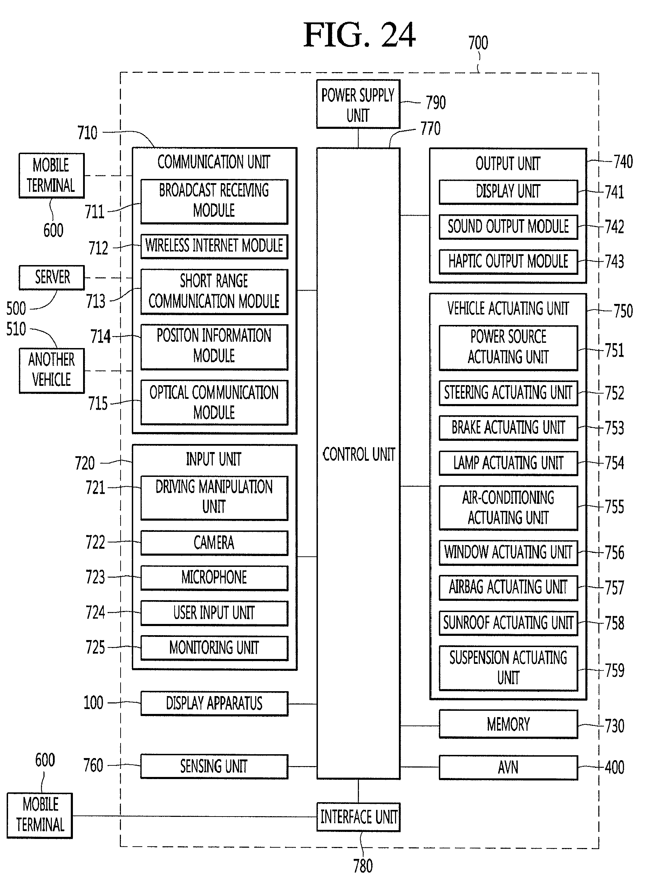

Referring to the figure 24, the above-described driver assistance apparatus 100 may be included in the vehicle 700.

The vehicle 700 may include a communication unit 710, an input unit 720, a sensing unit 760, an output unit 740, a vehicle drive unit 750, a memory 730, an interface 780, a controller 770, a power supply unit 790, a driver assistance apparatus 100 and AVN apparatus 400. Here, among the units included in the driver assistance apparatus 100 and the units of the vehicle 700, the units having the same names are described as being included in the vehicle 700.

The communication unit 710 may include one or more modules which permit communication such as wireless communication between the vehicle and the mobile terminal 600, between the vehicle and the external server 510 or between the vehicle and the other vehicle 520. Further, the communication unit 710 may include one or more modules which connect the vehicle to one or more networks.

The communication unit 710 includes a broadcast receiving module 711, a wireless Internet module 712, a short-range communication module 713, and an optical communication module 715.

The broadcast reception module 711 receives a broadcast signal or broadcast related information from an external broadcast management server through a broadcast channel. Here, the broadcast includes a radio broadcast or a TV broadcast.

The wireless Internet module 712 refers to a wireless Internet access module and may be provided inside or outside the vehicle. The wireless Internet module 712 transmits and receives a wireless signal through a communication network according to wireless Internet access technologies.

Examples of such wireless Internet access technologies include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A (Long Term Evolution-Advanced), and the like. The wireless Internet module 712 may transmit/receive data according to one or more of such wireless Internet technologies, and other Internet technologies as well. For example, the wireless Internet module 712 may wirelessly exchange data with the external server 510. The wireless Internet module 72 may receive weather information and road traffic state information (e.g., transport protocol experts group (TPEG) information) from the external server 510.

The short-range communication module 713 is configured to facilitate short-range communication. Such short-range communication may be supported using at least one of BluetoothTM, Radio Frequency Identification (RFID), Infrared Data Association (IrDA), Ultra-Wideband (UWB), ZigBee, Near Field Communication (NFC), Wireless-Fidelity (Wi-Fi), Wi-Fi Direct, Wireless USB (Wireless Universal Serial Bus), and the like.

The short-range communication module 713 may form a wireless local area network to perform short-range communication between the vehicle and at least one external device. For example, the short-range communication module 713 may wirelessly exchange data with the mobile terminal 600. The short-range communication module 713 may receive weather information and road traffic state information (e.g., transport protocol experts group (TPEG) information) from the mobile terminal 600. When a user rides in the vehicle, the mobile terminal 600 of the user and the vehicle may pair with each other automatically or by executing the application of the user.

A location information module 714 acquires the location of the vehicle and a representative example thereof includes a global positioning system (GPS) module. For example, the vehicle may acquire the location of the vehicle using a signal received from a GPS satellite upon utilizing the GPS module.

The optical communication module 715 may include a light emitting unit and a light reception unit.

The light reception unit may convert a light signal into an electric signal and receive information. The light reception unit may include a photodiode (PD) for receiving light. The photodiode may covert light into an electric signal. For example, the light reception unit may receive information on a preceding vehicle through light emitted from a light source included in the preceding vehicle.

The light emitting unit may include at least one light emitting element for converting electrical signals into a light signal. Here, the light emitting element may be a Light Emitting Diode (LED). The light emitting unit converts electrical signals into light signals to emit the light. For example, the light emitting unit may externally emit light via flickering of the light emitting element corresponding to a prescribed frequency. In some embodiments, the light emitting unit may include an array of a plurality of light emitting elements. In some embodiments, the light emitting unit may be integrated with a lamp provided in the vehicle. For example, the light emitting unit may be at least one selected from among a headlight, a taillight, a brake light, a turn signal, and a sidelight. For example, the optical communication module 715 may exchange data with the other vehicle 520 via optical communication.

The input unit 720 may include a driving operation unit 721, a camera 195, a microphone 723 and a user input unit 724.

The driving operation unit 721 receives user input for driving of the vehicle (see FIG. 2). The driving operation unit 721 may include a steering input unit 721A, a shift input unit 721D, an acceleration input unit 721C and a brake input unit 721B.

The steering input unit 721A is configured to receive user input with regard to the direction of travel of the vehicle. The steering input unit 721A may include a steering wheel using rotation. In some embodiments, the steering input unit 721A may be configured as a touchscreen, a touch pad, or a button.

The shift input unit 721D is configured to receive input for selecting one of Park (P), Drive (D), Neutral (N), and Reverse (R) gears of the vehicle from the user. The shift input unit 721D may have a lever form. In some embodiments, the shift input unit 721D may be configured as a touchscreen, a touch pad, or a button.

The acceleration input unit 721 C is configured to receive input for acceleration of the vehicle from the user. The brake input unit 721B is configured to receive input for speed reduction of the vehicle from the user. Each of the acceleration input unit 721C and the brake input unit 721B may have a pedal form. In some embodiments, the acceleration input unit 721C or the brake input unit 721B may be configured as a touchscreen, a touch pad, or a button.

The camera 722 may include an image sensor and an image processing module. The camera 722 may process a still image or a moving image obtained by the image sensor (e.g., CMOS or CCD). In addition, the image processing module processes the still image or the moving image acquired through the image sensor, extracts necessary information, and delivers the extracted information to the controller 770. The vehicle may include the camera 722 for capturing the front image of the vehicle or the image of the vicinity of the vehicle and the monitoring unit 725 for capturing the image of the space inside the vehicle.

The monitoring unit 725 may acquire an image of a passenger. The monitoring unit 725 may acquire an image for biometric information of the passenger.

Although the monitoring unit 725 and the camera 722 are included in the input unit 720 in FIG. 24, the camera 722 may be included in the driver assistance apparatus 100 as described above.

The microphone 723 may process external sound signals into electrical data. The processed data may be utilized in various ways according to a function that the vehicle is performing. The microphone 723 may convert a user voice command into electrical data. The converted electrical data may be transmitted to the controller 770.

Meanwhile, in some embodiments, a camera 722 or the microphone 723 may not be included in the input unit 720 but may be included in the sensing unit 760.

The user input unit 724 is configured to receive information from the user. When information is input via the user input unit 724, the controller 770 may control the operation of the vehicle to correspond to the input information. The user input unit 724 may include a touch input unit or a mechanical input unit. In some embodiments, the user input unit 724 may be located in a region of the steering wheel. In this case, the driver may operate the user input unit 724 with the fingers while gripping the steering wheel.

The sensing unit 760 is configured to sense signals associated with, for example, signals related to driving of the vehicle. To this end, the sensing unit 760 may include a collision sensor, a wheel sensor, a speed sensor, tilt sensor, a weight sensor, a heading sensor, a yaw sensor, a gyro sensor, a position module, a vehicle forward/reverse sensor, a battery sensor, a fuel sensor, a tire sensor, a steering sensor based on rotation of the steering wheel, a vehicle interior temperature sensor, a vehicle interior humidity sensor, an ultrasonic sensor, a radar, a Lidar, etc.

As such, the sensing unit 760 may acquire sensing signals with regard to, for example, vehicle collision information, vehicle traveling direction information, vehicle location information (GPS information), vehicle angle information, vehicle speed information, vehicle acceleration information, vehicle tilt information, vehicle forward/reverse information, battery information, fuel information, tire information, vehicle lamp information, vehicle interior temperature information, vehicle interior humidity information, steering wheel rotation angle information, etc.

Meanwhile, the sensing unit 760 may further include, for example, an accelerator pedal sensor, a pressure sensor, an engine speed sensor, an Air Flow-rate Sensor (AFS), an Air Temperature Sensor (ATS), a Water Temperature Sensor (WTS), a Throttle Position Sensor (TPS), a Top Dead Center (TDC) sensor, and a Crank Angle Sensor (CAS).

The sensing unit 760 may include a biometric sensor. The biometric sensor senses and acquires biometric information of the passenger. The biometric information may include fingerprint information, iris-scan information, retina-scan information, hand geometry information, facial recognition information, and voice recognition information. The biometric sensor may include a sensor for sensing biometric information of the passenger. Here, the monitoring unit 725 and the microphone 723 may operate as a sensor. The biometric sensor may acquire hand geometry information and facial recognition information through the monitoring unit 725.

The output unit 740 is configured to output information processed by the controller 770. The output unit 740 may include a display unit 741, a sound output unit 742, and a haptic output unit 743.

The display unit 741 may display information processed by the controller 770. For example, the display unit 741 may display vehicle associated information. Here, the vehicle associated information may include vehicle control information for direct control of the vehicle or driver assistance information for aiding in driving of the vehicle. In addition, the vehicle associated information may include vehicle state information that indicates the current state of the vehicle or vehicle traveling information regarding traveling of the vehicle.

The display unit 741 may include at least one selected from among a Liquid Crystal Display (LCD), a Thin Film Transistor LCD (TFT LCD), an Organic Light Emitting Diode (OLED), a flexible display, a 3D display, and an e-ink display.

The display unit 741 may configure an inter-layer structure with a touch sensor, or may be integrally formed with the touch sensor to implement a touchscreen. The touchscreen may function as the user input unit 724 which provides an input interface between the vehicle and the user and also function to provide an output interface between the vehicle and the user. In this case, the display unit 741 may include a touch sensor which senses a touch to the display unit 741 so as to receive a control command in a touch manner. When a touch is input to the display unit 741 as described above, the touch sensor may sense the touch and the controller 770 may generate a control command corresponding to the touch. Content input in a touch manner may be characters or numbers, or may be, for example, instructions in various modes or menu items that may be designated.

Meanwhile, the display unit 741 may include a cluster to allow the driver to check vehicle state information or vehicle traveling information while driving the vehicle. The cluster may be located on a dashboard. In this case, the driver may check information displayed on the cluster while looking forward.

Meanwhile, in some embodiments, the display unit 741 may be implemented as a head up display (HUD). When the display unit 741 is implemented as a HUD, information may be output via a transparent display provided at the windshield. Alternatively, the display unit 741 may include a projector module to output information via an image projected onto the windshield.

The sound output unit 742 is configured to convert electrical signals from the controller 170 into audio signals and to output the audio signals. To this end, the sound output unit 742 may include, for example, a speaker. The sound output unit 742 may output sound corresponding to the operation of the user input unit 724.

The haptic output unit 743 is configured to generate tactile output. For example, the haptic output unit 743 may operate to vibrate a steering wheel, a safety belt, or a seat so as to allow the user to recognize an output thereof.

The vehicle drive unit 750 may control the operation of various devices of the vehicle. The vehicle drive unit 750 may include at least one of a power source drive unit 751, a steering drive unit 752, a brake drive unit 753, a lamp drive unit 754, an air conditioner drive unit 755, a window drive unit 756, an airbag drive unit 757, a sunroof drive unit 758, and a suspension drive unit 759.

The power source drive unit 751 may perform electronic control of a power source inside the vehicle.

For example, in the case where a fossil fuel based engine (not illustrated) is a power source, the power source drive unit 751 may perform electronic control of the engine. As such, the power source drive unit 751 may control, for example, an output torque of the engine. In the case where the power source drive unit 751 is an engine, the power source drive unit 751 may control the speed of the vehicle by controlling the output torque of the engine under the control of the controller 770.

In another example, in the case where an electric motor (not illustrated) is a power source, the power source drive unit 751 may perform control of the motor. As such, the power source drive unit 751 may control, for example, the RPM and torque of the motor.

The steering drive unit 752 may perform electronic control of a steering apparatus inside the vehicle. The steering drive unit 752 may change the direction of travel of the vehicle.

The brake drive unit 753 may perform electronic control of a brake apparatus (not illustrated) inside the vehicle. For example, the brake drive unit 753 may reduce the speed of the vehicle by controlling the operation of brakes located at wheels. In another example, the brake drive unit 753 may adjust the direction of travel of the vehicle leftward or rightward by differentiating the operation of respective brakes located at left and right wheels.

The lamp drive unit 754 may turn at least one lamp arranged inside and outside the vehicle on or off. In addition, the lamp drive unit 754 may control, for example, the intensity and direction of light of each lamp. For example, the lamp drive unit 754 may perform control of a turn signal lamp or a brake lamp.

The air conditioner drive unit 755 may perform electronic control of an air conditioner (not illustrated) inside the vehicle. For example, when the interior temperature of the vehicle is high, the air conditioner drive unit 755 may operate the air conditioner to supply cold air to the interior of the vehicle.

The window drive unit 756 may perform electronic control of a window apparatus inside the vehicle. For example, the window drive unit 756 may control opening or closing of left and right windows of the vehicle.

The airbag drive unit 757 may perform the electronic control of an airbag apparatus inside the vehicle. For example, the airbag drive unit 757 may control an airbag to be deployed in a dangerous situation.

The sunroof drive unit 758 may perform electronic control of a sunroof apparatus (not illustrated) inside the vehicle. For example, the sunroof drive unit 758 may control opening or closing of a sunroof.

The suspension drive unit 759 may perform electronic control of a suspension apparatus (not shown) inside the vehicle. For example, when a road surface is uneven, the suspension drive unit 759 may control the suspension apparatus to reduce vibrations of the vehicle.

The memory 730 is electrically connected to the controller 770. The memory 730 may store basic data of the unit, control data for operation control of the unit and input/output data. The memory 730 may be various storage apparatuses, which are implemented in a hardware manner, such as a ROM, RAM, EPROM, flash drive and hard drive. The memory 730 may store a variety of data for overall operation of the vehicle, such as a program for processing or control of the controller 770.

The interface 780 may serve as a passage for various kinds of external devices that are connected to the vehicle. For example, the interface 780 may have a port that is connectable to the mobile terminal 600 and may be connected to the mobile terminal 600 via the port. In this case, the interface 780 may exchange data with the mobile terminal 600.

The interface 780 may serve as a passage for providing electric energy to the connected mobile terminal 600. When the mobile terminal 600 is electrically connected to the interface 780, the interface 780 may provide electric energy supplied from the power supply unit 790 to the mobile terminal 600 under control of the controller 770.

The controller 770 may control the overall operation of each unit inside the vehicle. The controller 770 may be referred to as an Electronic Control Unit (ECU).

The controller 770 may perform a function corresponding to the delivered signal according to delivery of a signal for executing the driver assistance apparatus 100.

The controller 770 may be implemented in a hardware manner using at least one selected from among Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, and electric units for the implementation of other functions.

The controller 770 may perform the role of the above-described processor 170. That is, the processor 170 of the driver assistance apparatus 100 may be directly set in the controller 770 of the vehicle. In such an embodiment, the driver assistance apparatus 100 may be understood as a combination of some components of the vehicle.

Alternatively, the controller 770 may control the components to transmit information requested by the processor 170.

The power supply unit 790 may supply power required to operate the respective components under the control of the controller 770. In particular, the power supply unit 790 may receive power from, for example, a battery (not illustrated) inside the vehicle.

The AVN apparatus 400 may exchange data with the controller 770. The controller 770 may receive navigation information from the AVN apparatus or a separate navigation apparatus. Here, the navigation information may include destination information, information on a route to the destination, map information related to vehicle traveling and current position information of the vehicle.

According to the embodiments, the vehicle driver assistance apparatus provides information in a general guide mode in the case of a general situation. In addition, the vehicle driver executes a guide mode corresponding to an execution condition when an execution condition for a display guide mode or an execution condition for a sound guide mode is detected from the internal and external situation information, thus providing driver assistance information to a driver according to an optimal output method.

Specifically, the vehicle driver assistance apparatus provides the display guide mode. In the display guide mode, pieces of information, which have been provided through sound, are provided through graphic images, thus enabling efficient information provision even in a situation where the user hardly recognizes sound. Also, it is possible to provide information to the driver more accurately by increasing the amount of information of an existing graphic image which has been displayed and enhancing discrimination.

Also, the vehicle driver assistance apparatus provides the sound guide mode. In the sound guide mode, pieces of information which have been provided through graphic images are provided through sound, thus enabling efficient information provision even in a situation where the user hardly recognizes the graphic images.

The above described features, configurations, effects, and the like are included in at least one of the embodiments of the present invention, and should not be limited to only one embodiment. In addition, the features, configurations, effects, and the like as illustrated in each embodiment may be implemented with regard to other embodiments as they are combined with one another or modified by those skilled in the art. Thus, content related to these combinations and modifications should be construed as including in the scope and spirit of the invention as disclosed in the accompanying claims.

Further, although the embodiments have been mainly described until now, they are just exemplary and do not limit the present invention. Thus, those skilled in the art to which the present invention pertains will know that various modifications and applications which have not been exemplified may be carried out within a range which does not deviate from the essential characteristics of the embodiments. For instance, the constituent elements described in detail in the exemplary embodiments can be modified to be carried out. Further, the differences related to such modifications and applications shall be construed to be included in the scope of the present invention specified in the attached claims.

## Claims

1. A vehicle driving assistance apparatus, comprising:
an output unit including an audio output unit configured to output an audio notification and a display unit configured to display a visual image;
a monitoring unit configured to monitor an inside status of a vehicle and obtain vehicle internal information from the inside status;
a camera configured to capture an outside view of the vehicle and obtain vehicle external information from the outside view; and
a processor configured to (i) determine, based on the vehicle internal information and the vehicle external information, a first guide mode from a plurality of guide modes including a general guide mode, a display guide mode, and a sound guide mode, and (ii) provide, to the output unit, driving assistance information associated with the first guide mode,
wherein the driving assistance information is provided with one or more visual images that are displayed by the display unit and one or more audio notifications that are output by the audio output unit.

2. The vehicle driving assistance apparatus of claim 1, wherein the processor is configured to:
determine whether the first guide mode is the display guide mode or the sound guide mode, and
change, based on the determination that the first guide mode is the display guide mode or the sound guide mode, a number of the one or more visual images and a number of the one or more audio notifications.

3. The vehicle driving assistance apparatus of claim 1 or claim 2, wherein the processor is configured to:
determine whether the first guide mode is the display guide mode, and
change, based on the determination that the first mode is the display guide mode, at least one of a shape, a size, a hue, a type, a luminance, and a saturation of each visual image.

4. The vehicle driving assistance apparatus of any one of the claims 1 to 3, further comprising a memory configured to store data that associates the vehicle internal information and the vehicle external information with the plurality of guide modes,
wherein the processor is configured to determine the first guide mode from the plurality of guide modes based on the data.

5. The vehicle driving assistance apparatus of claim 4, wherein the processor is configured to:
determine, based on at least the vehicle internal information, vehicle internal noise, user behavior information, and passenger behavior information, and
determine the first guide mode as the display guide mode based on the vehicle internal noise, the user behavior information, and the passenger behavior information.

6. The vehicle driving assistance apparatus of claim 4 or claim 5, wherein the processor is configured to:
determine, based on the vehicle internal information and the vehicle external information, external object information, external weather information, and driver status information, and
determine the first guide mode as the sound guide mode based on the external object information, the external weather information, and the driver status information.

7. The vehicle driving assistance apparatus of any one of claims 1 to 6, wherein the processor is configured to:
determine whether the first guide mode is the display guide mode, and
transfer a speech or an image between a driver and a passenger based on the determination that the first guide mode is the display guide mode.

8. The vehicle driving assistance apparatus of claim 7, wherein the speech is made by the passenger located in a back seat of the vehicle and the image is obtained by capturing a view toward a spare seat or the back seat.

9. The vehicle driving assistance apparatus of any one of claims 1 to 8, wherein the monitoring unit includes a microphone that measures a vehicle internal noise, and
the processor is configured to determine the first guide mode as the display guide mode based on the vehicle internal noise.

10. The vehicle driving assistance apparatus of claim 9, wherein the processor is configured to change a number of the one or more visual images and a number of the one or more audio notifications based on the determination of the first guide mode.

11. The vehicle driving assistance apparatus of claim 10, wherein the processor is configured to:
determine whether the driving assistance information is user convenience information including at least one of navigation information, traffic information, communication information, and vehicle state information, and
mute the one or more audio notifications provided for the user convenience information based on the determination that the driving assistance information is the user convenience information.

12. The vehicle driving assistance apparatus of claim 11, further comprising one or more sensors configured to monitor outside regions of the vehicle,
wherein the processor is configured to:
obtain emergency assistance information including at least one of automatic emergency braking information, blind-spot detection information, forward collision avoidance information, cross traffic alert information, and parking assistance information, and
increase, based on the emergency assistance information, a volume of the one or more audio notifications.

13. The vehicle driving assistance apparatus of any one of claims 1 to 12, wherein the processor is configured to provide the one or more visual images as text.

14. The vehicle driving assistance apparatus of any one of claims 1 to 13, wherein the processor is configured to:
determine whether the first guide mode is switched to the display guide mode, and
change at least one of a shape, a size, a hue, a type, a luminance, and a saturation of each visual image based on the determination that the first guide mode is switched to the display guide mode.

15. The vehicle driving assistance apparatus of any one of claims 1 to 14, further comprising one or more sensors to monitor outside regions of the vehicle,
wherein the processor is configured to:
obtain emergency assistance information including at least one of automatic emergency braking information, blind-spot detection information, forward collision avoidance information, cross traffic alert information, and parking assistance information, and expand the outside regions of the vehicle for monitoring.
